# EUROPÄISCHE PATENTSCHRIFT

(11) **EP 4 426 866 B1**
(45) Veröffentlichungstag und Bekanntmachung des Hinweises auf die Patenterteilung: **01.04.2026**
(21) Anmeldenummer: 22814306.1
(22) Anmeldetag: 03.11.2022
(51) Int. Cl.: C22B 5/12, C22B 5/14, F24S 20/20, F24S 90/00, F27D 13/00, C21B 13/00, C21B 13/08, F27B 7/34, F27D 99/00

(54) **VERFAHREN UND VORRICHTUNG ZUR REDUKTION VON METALLOXID MITTELS EINES REDUZIERENDEN GASES ODER GASGEMISCHES UNTER NUTZUNG VON SOLARTHERMIE**
METHOD AND DEVICE FOR REDUCING METAL OXIDE USING A REDUCING GAS OR GAS MIXTURE USING SOLAR THERMAL ENERGY
PROCÉDÉ ET DISPOSITIF DE REDUCTION D'OXYDE METALLIQUE A L'AIDE D'UN GAZ REDUCTEUR OU D'UN MELANGE DE GAZ UTILISANT L'ENERGIE SOLAIRE THERMIQUE

(30) Priorität: 05.11.2021 DE 102021128851; 24.06.2022 DE 102022115857
(43) Veröffentlichungstag der Anmeldung: 11.09.2024
(73) Patentinhaber: SMS group GmbH, 41069 Mönchengladbach (DE)
(72) Erfinder: KLEIN, Carsten Andreas, 40237 Düsseldorf (DE); OUDEHINKEN, Heinz-Jürgen, 45149 Essen (DE); REIFFERSCHEID, Markus, 41352 Korschenbroich (DE); PAPALIA, Katia, 16149 Genua (IT); FELDHAUS, Stephan, 8610 Uster (CH); KRULL, Jan, 17019 Varazze (IT)
(74) Vertreter: Richly & Ritschel Patentanwälte PartG mbB
(86) Internationale Anmeldenummer: PCT/EP2022/080710
(87) Internationale Veröffentlichungsnummer: WO 2023/079017

(56) Entgegenhaltungen:
- DE-A1- 102013 211 249
- US-A1- 2006 188 433
- US-A1- 2011 135 566
- US-A1- 2016 208 362
- US-A1- 2019 346 177
- "Forschungsprogramm Wasserstoff", 21 June 2012 (2012-06-21), XP055072038, Retrieved from the Internet <URL:http://www.bfe.admin.ch/php/modules/enet/streamfile.php?file=000000010836.pdf&name=000000290612> [retrieved on 20130719]
- BRKIC MAJK ET AL: "Solar carbothermal reduction of aerosolized ZnO particles under vacuum: Modeling, experimentation, and characterization of a drop-tube reactor", CHEMICAL ENGENEERING JOURNAL, ELSEVIER, AMSTERDAM, NL, vol. 313, 30 December 2016 (2016-12-30), pages 435 - 449, XP029900753, ISSN: 1385-8947, DOI: 10.1016/J.CEJ.2016.12.057
- CHUAYBOON SRIRAT ET AL: "Combined ZnO reduction and methane reforming for co-production of pure Zn and syngas in a prototype solar thermochemical reactor", FUEL PROCESSING TECHNOLOGY, ELSEVIER BV, NL, vol. 211, 10 September 2020 (2020-09-10), XP086325405, ISSN: 0378-3820, [retrieved on 20200910], DOI: 10.1016/J.FUPROC.2020.106572

## Beschreibung

Die vorliegende Erfindung betrifft ein Verfahren zur Reduktion von Metalloxid mittels eines reduzierenden Gases oder Gasgemisches unter Verwendung von mittels konzentrierter Sonnenstrahlung gewonnener Wärmeenergie. Ferner betrifft die vorliegenden Erfindung eine Vorrichtung zur Reduktion von Metalloxid mittels eines reduzierenden Gases oder Gasgemisches unter Verwendung von mittels konzentrierter Sonnenstrahlung gewonnener Wärmeenergie.

Bei der Reduktion von Metalloxid sind zum Teil erhebliche Wärmemengen notwendig, damit das Metalloxid und/oder ein zur Reduktion des zu reduzierenden Gases oder Gasgemisches auf die für die Reduktionsreaktion notwendigen Temperaturen erhitzt werden. Eisenoxid kann beispielsweise im Hochofenprozess zu Roheisen reduziert werden, wobei als Reduktionsmittel hauptsächlich Kohlenstoffmonooxid dient, das durch Verbrennung von Koks im Hochofen selbst erzeugt wird. Hierbei werden erhebliche Mengen von Kohlendioxid erzeugt. Weiterhin sind Brenner bekannt, die dazu geeignet sind, Erdgas oder Wasserstoff zu verbrennen. Auch bei der Produktion von Wasserstoff fallen erhebliche Mengen von Kohlendioxid an, wenn zu dessen Herstellung keine erneuerbaren Energiequellen verwendet werden. Im Weiteren gibt es eine Reihe von elektrischen Beheizungsmöglichkeiten. Bei der Erzeugung dieses elektrischen Stroms werden ebenfalls große Mengen von Kohlendioxid erzeugt, wenn zu dessen Herstellung keine erneuerbaren Energiequellen verwendet werden.

Elektrischer Strom wird heutzutage auf vielfältige Weise erzeugt. Hierzu werden erneuerbare und nicht-erneuerbare Energiequellen verwendet. Zu den erneuerbaren Energiequellen gehören insbesondere Sonnenenergie, Wasserkraft und Windenergie. Sonnenenergie wird mittels Solarzellen in elektrischen Strom gewandelt, der anschließend bedarfsgerecht eingesetzt werden kann. Zu den nicht erneuerbaren Energiequellen gehören Kernenergie, Öl-, Gas-, Kohlerkraftwerke.

Aus dem Stand der Technik sind unterschiedliche Verfahren und Vorrichtungen zur Reduktion von Metalloxiden bekannt. Aus der US 2011/0135566 A1 sind ein Verfahren und einen Reaktor zur quasikontinuierlichen Durchführung einer chemischen Reaktion an der Oberfläche eines festen Reaktanten in einer Gas/Fest-Phasen Reaktion bekannt, wobei die Oberfläche eine Oberfläche eines Metalloxids in einer Gas/Fest-Phasen-Reaktion ist.

Aus der DE 10 2013 211 249 A1 ist bekannt, solarthermische Energie von konzentrierenden Solaranlagen, die mit Luft als Arbeitsmedium arbeiten, effektiv zu speichern, um sie später in Elektrizität umzuwandeln, wenn die Sonne untergegangen ist oder sie von Wolken bedeckt ist.

Aus der US 2016/0208362 A1 sind Verfahren, Systeme und Komponenten bekannt, die für karbothermische Reduktionsprozesse geeignet sind. Beispielhafte Systeme umfassen einen Reaktor, wie beispielsweise einen hybriden solarthermischen elektrischen Reaktor, einen solarthermischen Reaktor, einen elektrischen Reaktor oder einen durch Gasverbrennung beheizten Reaktor, eine Pelletquelle, eine Gasreaktantquelle und eine Vakuumquelle.

Aus der US 2006/0188433 A1 ist ein Verfahren zur Reduzierung von Metalloxidpartikeln unter Verwendung eines Hochtemperatur-Solar-Aerosolreaktors bekannt.

In der US 2019/0346177 A1 ist eine Vorrichtung, die mit konzentrierter Sonnenstrahlung betrieben werden kann beschrieben, wobei die Vorrichtung einen Körper mit einem Hohlraum umfasst, der dazu ausgelegt ist, konzentrierte Sonnenstrahlung aufzunehmen, einen Wärmeenergieabsorber, der mit dem Hohlraum verbunden ist, um Wärme aus der konzentrierten Sonnenstrahlung innerhalb des Hohlraums aufzunehmen, eine Kammer, die einen Stoffkörper enthält, wobei die Kammer in Wärmeaustauschbeziehung mit dem Wärmeenergieabsorber steht, um von diesem Wärme aufzunehmen.

Im Überblicksbericht 2011 des Forschungsprogramms Wasserstoff des Bundesamtes für Energie BFE der Schweizerischen Eidgenossenschaft ist ein solarthermischer Reaktor zur Herstellung von Wasserstoff und Synthesegas unter Verwendung von Ceriumoxid (CeO2) als Redoxkeramik beschrieben.

In der Veröffentlichung "Solar carbothermal reduction of aerosolized ZnO particles under vacuum", DOI: 10.1016/J.CEJ.2016.12.057 beschreibt eine kohlenstoffbasierte Reduktion von Zinkoxid (ZnO) unter Verwendung von konzentrierter Sonnenstrahlung.

Die Veröffentlichung "Combined ZnO reduction and methane reforming for co-production of pure Zn and syngas in a prototype solar thermochemical reactor", 30 DOI: 10.1016/J.FUPROC.2020.106572 beschreibt eine kombinierte Zinkoxid Reduktion (ZnO) und Synthesegasherstellung mittels konzentrierter Sonnenstrahlung.

Der vorliegenden Erfindung liegt die Aufgabe zugrunde, ein Verfahren zur Reduktion von Metalloxid bereitzustellen, mittels dem im Vergleich zu aus dem Stand der Technik bekannten Verfahren eine erhebliche Reduktion der Emission von Treibhausgasen und insbesondere eine Reduktion der Emission von Kohlendioxid realisiert ist.

Die der vorliegenden Erfindung zugrundeliegende Aufgabe wird durch ein Verfahren mit den in Anspruch 1 angegebenen Merkmalen gelöst. Ausgestaltungen des Verfahrens sind in den von Anspruch 1 abhängigen Ansprüchen beschrieben.

Im Genaueren wird die der vorliegenden Erfindung zugrundeliegende Aufgabe durch ein Verfahren zur Reduktion von Metalloxid mittels eines reduzierenden Gases oder Gasgemisches gelöst, wobei das Verfahren einen Verfahrensschritt zum Zusammenführen des zu reduzierenden Metalloxids und des zur Reduktion des zu reduzierenden Metalloxids verwendeten Gases oder Gasgemisches aufweist. Das Verfahren weist ferner einen Verfahrensschritt zum Erwärmen des Metalloxids und/oder des für die Reduktion des zu reduzierenden Metalloxids verwendeten Gases oder Gasgemisches auf, wobei die zum Erwärmen des zu reduzierenden Metalloxids und/oder des für die Reduktion des zu reduzierenden Metalloxids verwendeten Gases oder Gasgemisches verwendete Wärmeenergie zumindest teilweise mittels konzentrierter Sonnenstrahlung gewonnen wird, wobei das für die Reduktion des Metalloxids verwendete Gas oder Gasgemisch mehr als 10 % Wasserstoffgas aufweist.

Das erfindungsgemäße Verfahren weist den Vorteil auf, dass zum Erwärmen des zu reduzierenden Metalloxids und/oder des zur Reduktion des Metalloxids verwendeten Gases oder Gasgemisches erheblich weniger und gegebenenfalls keine Energie benötigt wird, die aus fossilen Brennstoffen oder mittels Kernkraft gewonnen wird. Folglich wird beim Erwärmen des zu reduzierenden Metalloxids und/oder des zur Reduktion des Metalloxids verwendeten Gases oder Gasgemisches erheblich weniger und gegebenenfalls kein Kohlendioxid erzeugt.

Aufgrund der Nutzung von konzentrierter Sonnenstrahlung und somit aufgrund der Nutzung von Solarthermie weist das erfindungsgemäße Verfahren einen hohen Wirkungsgrad hinsichtlich des zur Erwärmung genutzten Energieanteils der Sonnenstrahlung auf. Aufgrund der Verwendung von konzentrierter Sonnenstrahlung können im Bereich von oder mehr als 30% der Strahlungsenergie der konzentrierten Sonnenstrahlung zur Erwärmung des zu reduzierenden Metalloxids und/oder des zur Reduktion des Metalloxids verwendeten Gases oder Gasgemisches genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des zu reduzierenden Metalloxids und/oder des zur Reduktion des Metalloxids verwendeten Gases oder Gasgemisches nochmals reduziert.

Unter einer Reduktion von Metalloxid ist erfindungsgemäß eine chemische Reduktion von Metalloxid zu verstehen.

Vorzugsweise ist das Verfahren derart ausgebildet, dass als Metalloxid ein Metalloxid verwendet wird, das ausgewählt ist aus der Gruppe bestehend aus Eisenoxid, Aluminiumoxid, Kupferoxid, Magnesiumoxid, Zinnoxid, Zinkoxid und Mischungen davon. Hinsichtlich der der Zusammensetzung des Metalloxids bestehen somit keine Beschränkungen.

Wenn das Metalloxid Eisenoxid aufweist, dann kann das Eisenoxid beispielsweise in Form von Eisenerz vorliegen. In diesem Fall ist es auch möglich, die vorliegende Erfindung als Verfahren zum Reduzieren von Eisenerz mittels eines reduzierenden Gases oder Gasgemisches zu bezeichnen.

Vorzugsweise ist das Verfahren derart ausgebildet, dass als reduzierende Gas oder Gasgemisch ein Gas oder Gasgemisch verwendet wird, das ausgewählt ist aus der Gruppe bestehend aus Wasserstoff, Kohlenmonoxid, Methan, Alkane, Alkene, Wasserdampf, Wasserstoffträger in Form von Wasserstoffverbindungen und Mischungen hiervon. Zum Beispiel sind Alkane, Alkene, Methan Wasserstoffträger in Form von Wasserstoffverbindungen.

Vorzugsweise weist das für die Reduktion des Metalloxids verwendete Gas oder Gasgemisch mehr als 30% und weiter vorzugsweise mehr als 50% Wasserstoffgas auf. Die Prozentangabe kann Volumenprozent oder Gewichtsprozent bedeuten.

In einer bevorzugten Ausführung des Verfahrens wird die zum Erwärmen des zu reduzierenden Metalloxids und/oder des Gases oder Gasgemisches verwendete Wärmeenergie in Gänze mittels konzentrierter Sonnenstrahlung gewonnen.

Vorzugsweise ist das Verfahren derart ausgebildet, dass Wärmeenergie des durch die Redoxreaktion erzeugten Reaktionsprodukts zur Vorwärmung des zu reduzierenden Metalloxids und/oder des zur Reduktion des zu reduzierenden Metalloxids verwendeten Gases oder Gasgemisches und/oder eines Reaktors, in dem die Redoxreaktion des Metalloxids mit dem Gas oder Gasgemisch ausgeführt wird, verwendet wird.

Das entsprechend ausgebildete Verfahren weist eine verbesserte Energieeffizienz auf. Denn durch Nutzung der Wärmeenergie des durch die Redoxreaktion erzeugten Reaktionsprodukts zur Vorwärmung des zu reduzierenden Metalloxids und des zur Reduktion des zu reduzierenden Metalloxids verwendeten Gases oder Gasgemisches ist weniger Wärmeenergie zur Erwärmung des Metalloxids und/oder des Gases oder Gasgemisches nötig, die aus konzentrierter Sonnenstrahlung gewonnen wird.

Die Wärmeenergie zur Vorwärmung des Metalloxids und/oder des Gases oder Gasgemisches kann beispielsweise einem Reaktor oder einem Ofen zugeführt werden, in dem das Metalloxid und der das Gas oder Gasgemisch miteinander reagieren.

Die Wärmeenergie des aus der Reaktion des Metalloxids und des Gases oder Gasgemisches hervorgehende Reaktionsprodukt wird beispielweise mittels eines Wärmetauchers auf ein Wärmetransportfluid übertragen, welches dann zur Erwärmung des Metalloxids und/oder des Gases oder Gasgemisches verwendet wird. Es ist jedoch auch möglich, dass das aus der Reaktion des Metalloxids und des Gases oder Gasgemisches hervorgehende Reaktionsprodukt direkt durch den Ofen bzw. den Reaktor geleitet wird, in dem das Metalloxid mit dem Gas oder Gasgemisch reagiert.

Wenn das aus der Reaktion des Metalloxids und des Gases oder Gasgemisches Wasser in Form von Wasserdampf als Reaktionsprodukt hervorgehet, wird vorzugsweise auch die Kondensationswärme des Wasserdampfs zur Vorwärmung des Metalloxids und/oder des Gases oder Gasgemisches verwendet.

Vorzugsweise ist das Verfahren derart ausgebildet, dass das Wasser, das durch die Redoxreaktion des zu reduzierenden Metalloxids mit dem Gas oder Gasgemisch erzeugt wird, zur Gewinnung von Wasserstoff genutzt wird.

Das entsprechend ausgebildete Verfahren weist den Vorteil auf, dass das bei der Redoxreaktion erzeugte Wasser bzw. der bei der Redoxreaktion erzeugte Wasserdampf aufgrund der Stöchiometrie der Redoxreaktion genau im passenden Verhältnis zum eingesetzten Metalloxid steht, so dass eine Erzeugung von Wasserstoff aus dem als Produkt der Redoxreaktion anfallenden Wassers / Wasserdampfs gerade die erforderliche Menge an Wasserstoff erzeugt wird, die zur Fortführung des Prozesses - also der Reduktion von weiterem Metalloxid - erforderlich ist.

Die Erzeugung des Wasserstoffs aus Wasser, das aus der Redoxreaktion des zu reduzierenden Metalloxids mit dem Wasserstoff erzeugt wird, erfolgt beispielsweise mittels Hochtemperatur-Elektrolyse und/oder mittels Dampfreformierung und/oder mittels Thermolyse. Dabei wird vorzugsweise jeweils zumindest teilweise oder in Gänze Wärmeenergie verwendet, die mittels konzentrierter Sonnenstrahlung gewonnen wird.

Vorzugsweise ist das Verfahren derart ausgebildet, dass das zu reduzierende Metalloxid der Redoxreaktion in Form von stückigem Metalloxid, insbesondere in Form von stückigem Eisenoxid mit einer mittleren Partikelgröße im Bereich zwischen 5 mm und 50 mm zugeführt wird.

Vorzugsweise ist das Verfahren derart ausgebildet, dass das zu reduzierende Metalloxid der Redoxreaktion in Form von pulverförmigen Metalloxid, insbesondere in Form von pulverförmigen Eisenoxid mit einer mittleren Partikelgröße von weniger als 10 mm zugeführt wird.

Vorzugsweise ist das Verfahren derart ausgebildet, dass das zu reduzierende Metalloxid der Redoxreaktion in Form von gebrochenem Metalloxid bzw. gebrochenem Eisenerz mit einer mittleren Partikelgröße im Bereich zwischen 1 mm und 50 mm zugeführt wird.

Vorzugsweise ist das Verfahren derart ausgebildet, dass das zu reduzierende Metalloxid der Redoxreaktion in Form von gemahlenem Metalloxid mit einer mittleren Partikelgröße im Bereich zwischen 10 µm und 1 mm zugeführt wird.

Das entsprechen ausgebildete Verfahren weist den Vorteil auf, dass das in dieser Partikelgröße vorliegende Metalloxid schnell mittels des Gases oder Gasgemisches reduziert wird. Somit ermöglicht das entsprechend ausgebildete Verfahren eine effiziente Reduktion von Metalloxid.

Vorzugsweise ist das Verfahren derart ausgebildet, dass das zu reduzierende Metalloxid der Redoxreaktion in Form von Metalloxid-Pellets und/oder Eisenerz-Pellets mit einem mittleren Durchmesser im Bereich zwischen 10 mm und 20 mm zugeführt wird.

Das entsprechend ausgebildete Verfahren erleichtert die Handhabe (Transport, Förderung) des zu reduzierenden Metalloxids.

Vorzugsweise ist das Verfahren derart ausgebildet, dass das zu reduzierende Metalloxid und/oder das zur Reduktion des zu reduzierenden Metalloxids verwendete Gas oder Gasgemisch auf eine Temperatur im Bereich zwischen 200°C und 1500°C erwärmt werden.

Weiter vorzugsweise ist das Verfahren derart ausgebildet, dass das zu reduzierende Metalloxid auf eine Temperatur im Bereich zwischen 200°C und 1200°C und das zur Reduktion des zu reduzierenden Metalloxids verwendete Gas oder Gasgemisch auf eine Temperatur im Bereich zwischen 500°C und 1200°C erwärmt werden.

Die Erwärmung des zu reduzierenden Metalloxids und/oder des Gases oder Gasgemisches auf Temperaturen in diesen Temperaturbereichen erfolgt vorzugsweise im Wesentlichen oder ausschließlich mittels der durch konzentrierte Sonnenstrahlung gewonnenen Wärmeenergie.

Vorzugsweise wird das zu reduzierende Metalloxid und/oder das Gas oder Gasgemisch auf eine Temperatur zwischen 700°C und 1100 °C erwärmt wird. Umso größer die Temperatur ist, auf die zumindest einer der Reaktionspartner (Metalloxid und/oder Gas oder Gasgemisch), desto größer ist die Umwandlungsgeschwindigkeit des Metalloxids zu Metall.

Vorzugsweise wird das zu reduzierende Metalloxid und/oder das Gas oder Gasgemisch und/oder zumindest ein weiterer der Redoxreaktion zugeführter Bestandteil (z.B. Wasserstoff noch Kohlenmonoxid und/oder Kohlendioxid und/oder Methan und/oder ein Alkan und/oder Wasser) für eine Dauer zwischen 20 Minuten und 140 Minuten mittels der konzentrierten Sonnenstrahlung gewonnenen Wärmeenergie erwärmt.

Vorzugsweise ist das Verfahren derart ausgebildet, dass zusätzlich zu der mittels konzentrierter Sonnenstrahlung gewonnenen Wärmeenergie weitere Wärmeenergie mittels zumindest eines Brenners und/oder mittels zumindest eines Wärmetauschers und/oder mittels zumindest einer elektrischen Heizung gewonnen wird und zum Erwärmen des zu reduzierenden Metalloxids und/oder des für die Reduktion des zu reduzierenden Metalloxids verwendeten Gases oder Gasgemisches verwendet wird.

Die weitere Wärmeenergie kann z.B. mittels induktivem Erwärmen von metallischen Elementen, z.B. von metallischen Rohren, in denen das Gas oder Gasgemisch transportiert wird oder z.B. von einem eigens eingebauten Absorber gewonnen werden. Ferner kann die weitere Wärmeenergie mittels einer elektrischen Widerstandsheizung gewonnen werden, über die das Gas oder Gasgemisch strömt bzw. in Kontakt steht. Ferner kann die weitere Wärmeenergie mittels eines Plasmagenerators gewonnen werden.

Die zusätzliche Wärmeenergie kann zeitlich phasenweise oder zeitlich kontinuierlich zum Erwärmen des zu reduzierenden Metalloxids und/oder des Gases oder Gasgemisches verwendet werden.

Das entsprechend ausgebildete Verfahren weist den Vorteil auf, dass die Reduktion des Metalloxids auch in Zeiträumen sichergestellt ist, in denen beispielsweise nicht ausreichend mittels Solarthermie gewonnene Wärmeenergie zur Durchführung der Redoxreaktion des Metalloxids mit dem Gas oder Gasgemisch zu Verfügung steht. Somit weist das entsprechend ausgebildete Verfahren eine verbesserte Ausfallsicherheit auf.

Vorzugsweise ist das Verfahren derart ausgebildet, dass dieses einen Verfahrensschritt zum Erwärmen eines Primär-Wärmetransportfluids (HTF1) mittels konzentrierter Sonnenstrahlung und einen Verfahrensschritt zum Übertragen von Wärmeenergie des Primär-Wärmetransportfluids auf das zu reduzierende Metalloxid und/oder auf den für die Reduktion des zu reduzierenden Metalloxids verwendeten Gases oder Gasgemisches aufweist.

Das entsprechend ausgebildete Verfahren weist den Vorteil auf, dass das Erwärmen des zu reduzierenden Metalloxids und/oder des zur Reduktion des Metalloxids verwendeten Gases oder Gasgemisches nochmals effizienter möglich ist, da das Primär-Wärmetransportfluid derart ausgebildet bzw. ausgewählt sein kann, dass dieses besonders effizient mittels konzentrierter Sonnenstrahlung erwärmt werden kann. Folglich wird zum Erwärmen des zu reduzierenden Metalloxids und/oder des zur Reduktion des Metalloxids verwendeten Gases oder Gasgemisches nochmals weniger und gegebenenfalls kein Kohlendioxid erzeugt.

Das Primär-Wärmetransportfluid wird mittels der konzentrierten Sonnenstrahlung vorzugsweise auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C erwärmt.

Beispielsweise ist das Verfahren derart ausgebildet, dass beim Verfahrensschritt des Übertragens der Wärmeenergie des Primär-Wärmetransportfluids auf das zu reduzierende Metalloxid und/oder auf das für die Reduktion des zu reduzierenden Metalloxids verwendete Gas oder Gasgemische die Wärmeenergie des Primär-Wärmetransportfluids vor der Übertragung auf das zu reduzierenden Metalloxid und/oder auf das für die Reduktion des zu reduzierenden Metalloxids verwendete Gas oder Gasgemische nicht in elektrische Energie umgewandelt wird.

Folglich wird die (konzentrierte) Sonnenstrahlung vor Erwärmung des zu reduzierenden Metalloxids und/oder des für die Reduktion des zu reduzierenden Metalloxids verwendeten Gases oder Gasgemisches nicht in elektrische Energie (z.B. mittels Solarzellen) umgewandelt. Ferner wird auch die Wärmeenergie des Primär-Wärmetransportfluids nicht in elektrische Energie umgewandelt (beispielsweise mittels eines Generators), um anschließend eine Erwärmungseinrichtung mit der elektrischen Energie zu versorgen.

Das entsprechend ausgebildete Verfahren weist den Vorteil auf, dass das Primär-Wärmetransportfluid effizienter durch die konzentrierte Sonnenstrahlung erwärmt wird. Folglich wird auch das zu erwärmende und zu reduzierende Metalloxid und/oder das für die Reduktion des zu reduzierenden Metalloxids verwendete Gas oder Gasgemisch effizienter erwärmt, so dass mittels der zur Verfügung stehenden konzentrierten Sonnenstrahlung eine größere Menge an Metalloxid und/oder Gas oder Gasgemisch erwärmt werden kann.

Weiter beispielsweise ist das Verfahren derart ausgebildet, dass ein Teilstrom des Primär-Wärmetransportfluids zur Erzeugung von elektrischer Energie abgezweigt wird, wobei die elektrische Energie beispielsweise mittels eines Generators erzeugt wird. Diese elektrische Energie kann beispielsweise zur Versorgung einzelner Anlagenteile mit elektrischer Energie verwendet werden.

Vorzugsweise ist das Verfahren derart ausgebildet, dass als Primär-Wärmetransportfluid zumindest ein Gas verwendet wird, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist das Verfahren derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Vorzugsweise weist das Verfahren einen Verfahrensschritt des Übertragens von Wärmeenergie des Primär-Wärmetransportfluids auf eine Wärmespeichereinrichtung und ein Verfahrensschritt des Übertragens von Wärmeenergie der Wärmespeichereinrichtung auf das zu reduzierende Metalloxid und/oder auf das für die Reduktion des zu reduzierenden Metalloxids verwendete Gas oder Gasgemisch

Das entsprechend ausgebildete Verfahren weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des zu reduzierenden Metalloxids und/oder des zur Reduktion des zu reduzierenden Metalloxids verwendete Gas oder Gasgemisch ermöglicht.

Beispielsweise ist das Verfahren derart ausgebildet, dass zum Übertragen von Wärmeenergie der Wärmespeichereinrichtung auf das zu reduzierende Metalloxid und/oder das für die Reduktion des zu reduzierenden Metalloxids verwendete Gas oder Gasgemisch das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne des erfindungsgemäßen Verfahrens, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird. Somit wird die Wärmeenergie des Primär-Wärmetransportfluids mittelbar auf die Wärmespeichereinrichtung übertragen.

Vorzugsweise ist das Verfahren derart ausgebildet, dass die Übertragung von Wärmeenergie des Primär-Wärmetransportfluids auf die Wärmespeichereinrichtung in einem anderen Zeitfenster als die Übertragung von Wärmeenergie der Wärmespeichereinrichtung auf das zu reduzierende Metalloxid und/oder auf das für die Reduktion des zu reduzierenden Metalloxids verwendete Gas oder Gasgemisch erfolgt. Beispielsweise ist das Verfahren derart ausgebildet, dass die Übertragung von Wärmeenergie des Primär-Wärmetransportfluids auf die Wärmespeichereinrichtung zeitlich vor der Übertragung von Wärmeenergie der Wärmespeichereinrichtung auf das zu reduzierende Metalloxid und/oder auf das für die Reduktion des zu reduzierenden Metalloxids verwendete Gas oder Gasgemisch erfolgt.

Vorzugsweise weist das Verfahren einen Verfahrensschritt des Übertragens von Wärmeenergie des Primär-Wärmetransportfluids auf ein Sekundär-Wärmetransportfluid in einer Wärmetauschereinrichtung und einen Verfahrensschritt des Übertragens von Wärmeenergie des Sekundär-Wärmetransportfluids auf das zu reduzierende Metalloxid und/oder auf das für die Reduktion des zu reduzierenden Metalloxids verwendete Gas oder Gasgemisch in einer Erwärmungseinrichtung auf.

Das entsprechend ausgebildete Verfahren weist den Vorteil auf, dass die Wärmeenergie des Primär-Wärmetransportfluids für die Erwärmung des Metalloxids und/oder des Gases oder Gasgemisches, das bzw. die auf eine bedeutend niedrigere Temperatur als eine Temperatur des Primär-Wärmetransportfluids erwärmt werden soll bzw. sollen, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Die Erwärmungseinrichtung kann beispielsweise als Reaktor ausgebildet sein, in dem das zu reduzierende Metalloxid und das Gas oder Gasgemisch miteinander reagieren.

Vorzugsweise ist das Verfahren derart ausgebildet, dass als Sekundär-Wärmetransportfluid ein Wärmetransportfluid verwendet wird, dessen Wärmekapazität größer ist als die Wärmekapazität des Primär-Wärmetransportfluids.

Das entsprechend ausgebildete Verfahren weist den Vorteil auf, dass die mittels konzentrierter Sonnenstrahlung gewonnene Wärmeenergie über größere Distanzen mit geringeren Wärmeverlusten zu einer Erwärmungseinrichtung (beispielsweise ein Reaktor oder ein Ofen), mittels der das zu reduzierende Metalloxid und/oder das für die Reduktion des zu reduzierenden Metalloxids verwendete Gas oder Gasgemisch erwärmt werden soll, transportierbar ist.

Vorzugsweise ist das Verfahren derart ausgebildet, dass als Sekundär-Wärmetransportfluid ein Wärmetransportfluid verwendet wird, dessen spezifische Wärmekapazität größer ist als die spezifische Wärmekapazität des Primär-Wärmetransportfluids.

Vorzugsweise ist das Verfahren derart ausgebildet, dass als Sekundär-Wärmetransportfluid ein Wärmetransportfluid verwendet wird, dessen Dichte größer ist als die Dichte des Primär-Wärmetransportfluids.

Vorzugsweise ist das Verfahren derart ausgebildet, dass als Sekundär-Wärmetransportfluid ein Wärmetransportfluid verwendet wird, dessen Produkt aus spezifischer Wärmekapazität und Dichte größer ist als das Produkt der spezifischen Wärmekapazität und Dichte des Primär-Wärmetransportfluids.

Unter der Dichte der jeweiligen Wärmetransportfluide ist deren Masse pro Volumeneinheit zu verstehen.

Vorzugsweise weist das Verfahren einen Verfahrensschritt des Transportierens des Primär-Wärmetransportfluids zu der Wärmetauschereinrichtung über eine erste Wegstrecke auf, wobei in der Wärmetauschereinrichtung Wärmeenergie von dem Primär-Wärmetransportfluid auf das Sekundär-Wärmetransportfluid übertragen wird. Ferner weist das Verfahren einen Verfahrensschritt des Transportierens des Sekundär-Wärmetransportfluids zu der Erwärmungseinrichtung über eine zweite Wegstrecke auf, die größer als die erste Wegstrecke ist, wobei in der Erwärmungseinrichtung Wärmeenergie von dem Sekundär-Wärmetransportfluid auf das Metalloxid und/oder auf das für die Reduktion des zu reduzierenden Metalloxids verwendete Gas oder Gasgemisch übertragen wird.

Das entsprechend ausgebildete Verfahren ermöglicht einen effizienten Transport der mittels konzentrierter Sonnenstrahlung erzeugten Wärmeenergie mit geringen Wärmeenergieverlusten über eine große Distanz. Folglich ermöglicht das entsprechend ausgebildete Verfahren, dass eine Fluiderwärmungseinrichtung, die dazu ausgebildet ist, ein Primär-Wärmetransportfluid mittels konzentrierter Sonnenstrahlung zu erwärmen, einen größeren Abstand zu der Erwärmungseinrichtung, in der das zu reduzierenden Metalloxid und/oder das zur Reduktion des zu reduzierenden Metalloxids verwendete Gas oder Gasgemisch mittels der durch konzentrierte Sonnenstrahlung gewonnenen Energie erwärmt wird bzw. erwärmt werden, aufweisen kann.

Dies ist insbesondere vorteilhaft, wenn die konzentrierte Sonnenstrahlung einer Solarthermieanlage zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass eine Erwärmungseinrichtung zum Erwärmen des zu reduzierenden Metalloxids und/oder des für die Reduktion des zu reduzierenden Metalloxids verwendeten Gases oder Gasgemisches üblicherweise außerhalb einer Fläche, in der die Reflektoreinrichtungen angeordnet sind, platziert werden kann. Folglich ermöglicht das beschriebene Verfahren eine Vergrößerung des Abstandes der Fluiderwärmungseinrichtung zu der Erwärmungseinrichtung zum Erwärmen des Metalloxids und/oder des Gases oder Gasgemisches.

Vorzugsweise ist die erste Wegstrecke kürzer als 1000 Meter. Weiter vorzugsweise ist die erste Wegstrecke kürzer als 800 Meter. Weiter vorzugsweise ist die erste Wegstrecke kürzer als 600 Meter. Weiter vorzugsweise ist die erste Wegstrecke kürzer als 400 Meter. Weiter vorzugsweise ist die erste Wegstrecke kürzer als 200 Meter.

Vorzugsweise beträgt die erste Wegstrecke zwischen 100 Meter und 1000 Meter. Weiter vorzugsweise beträgt die erste Wegstrecke zwischen 110 Meter und 900 Meter. Weiter vorzugsweise beträgt die erste Wegstrecke zwischen 120 Meter und 800 Meter. Weiter vorzugsweise beträgt die erste Wegstrecke zwischen 130 Meter und 700 Meter. Weiter vorzugsweise beträgt die erste Wegstrecke zwischen 140 Meter und 600 Meter. Weiter vorzugsweise beträgt die erste Wegstrecke zwischen 150 Meter und 500 Meter. Weiter vorzugsweise beträgt die erste Wegstrecke zwischen 160 Meter und 400 Meter. Weiter vorzugsweise beträgt die erste Wegstrecke zwischen 170 Meter und 300 Meter. Weiter vorzugsweise beträgt die erste Wegstrecke zwischen 180 Meter und 200 Meter.

Vorzugsweise weist das Verfahren einen Verfahrensschritt des Übertragens von Wärmeenergie des Sekundär-Wärmetransportfluids auf ein Tertiär-Wärmetransportfluid in einer dritten Wärmetauschereinrichtung und einen Verfahrensschritt des Übertragens von Wärmeenergie des Tertiär-Wärmetransportfluids auf das zu reduzierende Metalloxid und/oder auf das für die Reduktion des zu reduzierenden Metalloxids verwendete Gas oder Gasgemisch in die Erwärmungseinrichtung.

Beispielsweise wird als Tertiär-Wärmetransportfluid ein Gas verwendet, ausgewählt aus der Gruppe bestehend aus Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist das Verfahren derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen spezifische Wärmekapazität sich von der spezifischen Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte kleiner als die Wärmekapazität und/oder die Dichte des Sekundär-Wärmetransportfluids ist.

Weiter vorzugsweise ist das Verfahren derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Vorzugsweise ist das Verfahren derart ausgebildet, dass die mittels konzentrierter Sonnenstrahlung gewonnene Wärmeenergie einem Reaktor zugeführt wird, in dem das zu reduzierende Metalloxid und das für die Reduktion des zu reduzierenden Metalloxids verwendete Gas oder Gasgemisch zusammengeführt werden.

Die Übertragung der Wärmeenergie des Primär-Wärmetransportfluids auf das zu reduzierende Metalloxid und/oder auf das zur Reduktion des Metalloxids verwendete Gas oder Gasgemisch erfolgt in dem Reaktor. Unter einem Reaktor ist eine Einrichtung zu verstehen, in die das zu reduzierende Metalloxid und das zur Reduktion verwendete Gas oder Gasgemisch einleitbar sind und die einen vorgegebenen Raumbereich auf eine größere Temperatur als eine den vorgegebenen Raumbereich benachbarten Raumbereich erwärmen kann. Beispielsweise ist der Reaktor als Ofen ausgebildet. Der Ofen kann beispielsweise als Drehrohrofen oder als Fließbettreaktor ausgebildet sein. Der Reaktor wird beispielsweise von einem Wärmetransportfluid durchströmt. Erfindungsgemäß bestehen hinsichtlich der Ausgestaltung des Reaktors keinerlei Einschränkungen.

Der Reaktor kann auch als Erwärmungseinrichtung bezeichnet werden.

Vorzugsweise ist das Verfahren derart ausgebildet, dass der zur Reduktion des zu reduzierenden Metalloxids verwendete Gas oder Gasgemisch dem Reaktor in einem ersten Bereich des Reduktionsreaktors zugeführt wird, wobei das zu reduzierende Metalloxid dem Reaktor in einem zweiten Bereich des Reaktors zugeführt wird, der im Betriebszustand des Reaktors unterhalb des ersten Bereichs angeordnet ist, und wobei das durch die Redoxreaktion des Metalloxids und des Gases oder Gasgemisches erzeugte Reaktionsprodukt aus dem Reaktor in einem dritten Bereich zumindest teilweise abgeführt wird, wobei der dritte Bereich im Betriebszustand des Reaktors unterhalb des zweiten Bereichs angeordnet ist.

Das bei der Redoxreaktion erzeugte Reaktionsprodukt weist eine größere Dichte als das Gas oder Gasgemisch auf. Ferner weist das Reaktionsprodukt eine geringere Temperatur als das Gas oder Gasgemisch auf. Durch Abführen des Reaktionsproduktes in dem dritten Bereich des Reduktionsreaktors wird ein Abkühlen des Gases oder Gasgemisches verhindert bzw. entgegengewirkt, so dass das entsprechend ausgebildete Verfahren eine effizientere und schnellere Reduktion des Metalloxids ermöglicht.

Das Reaktionsprodukt kann Wasser bzw. Wasserdampf sein. Bei der Reduktion von Eisenoxid mittels Wasserstoffs entsteht beispielsweise Wasser als Reaktionsprodukt.

Vorzugsweise ist das Verfahren derart ausgebildet, dass dem zu reduzierenden Metalloxid zusätzlich zum Gas oder Gasgemisch noch Kohlenmonoxid und/oder Kohlendioxid und/oder Methan und/oder ein Alkan und/oder Wasser zugeführt werden.

Wenn das Metalloxid beispielsweise Eisenoxid aufweist, dann ist das Verfahren beispielsweise derart ausgebildet, dass nach der Reduktion des Eisenoxids das entstandene Eisen mit Kohlenmonoxid und/oder mit Wasserstoff in Kontakt gebracht wird, so dass das Eisen zu Zementit (Fe₃C) karburiert wird.

Weiter beispielsweise ist das Verfahren derart ausgebildet, dass nach der Reduktion des Eisenoxids das entstandene Eisen mit Methan in Kontakt gebracht wird, so dass das Eisen zu Zementit (Fe₃C) karburiert wird.

Die entsprechenden Reaktionen sind wie folgt:

3Fe + CH₄ -> Fe₃C + 2H₂

3Fe + 2CO -> Fe₃C + CO₂

3Fe + CO + H₂ -> Fe₃C + H₂0

Das entsprechend ausgebildete Verfahren weist den Vorteil auf, dass Zementit gegenüber Sauerstoff deutlich inerter als Eisen ist. Der Transport des Zementits gestaltet sich somit einfacher als der Transport von Eisen, da dieses während des Transports zumindest oberflächlich oxidieren würde.

Somit ist der Vorteil gegeben, dass zur Direktreduktion des zu reduzierendes Metalloxids das Metalloxid zu dem Ort transportiert werden kann, an dem die Reduktion durchgeführt wird. Dieser Ort liegt aufgrund der Verwendung von Solarthermie vorzugsweise in einem Bereich der Erde, die eine große Sonneneinstrahlung aufweist. Für den Fall, dass als reduzierendes Gas Wasserstoff verwendet wird, muss der Wasserstoff nicht zum zu reduzierenden Metalloxid transportiert werden. Der Transport von Wasserstoff über große Distanzen ist aufwendig, da der Wasserstoff üblicherweise unter großen Drücken im Bereich von 700 bar in Druckbehältern transportiert wird.

Ein weiterer Vorteil der Karburierung des Eisens ist, dass das daraus resultierende Zementit eine geringere Neigung zur Verklumpung aufweist. Dies hat beispielsweise einen Vorteil beim Einsatz des Zementits in einem Schmelzofen zur Stahlerzeugung.

Ein weiter Vorteil ist, das beim Einschmelzen von Zementit der Kohlenstoff des Zementits mit dem vorhandenen Sauerstoff zu Kohlenmonoxid und/oder zu Kohlendioxid reagiert, wobei diese Reaktion exotherm ist, so dass das Schmelzaggregat zum Einschmelzen des Eisens einen geringen Energieeintrag von Außen benötigt.

Ferner bildet das beim Schmelzen des Zementits so gebildete Kohlenmonoxid Gasblasen aus, die innerhalb der Schmelze nicht erwünschte Stoffe wie beispielsweise Stickstoff aufnehmen können, wodurch der erzeugte Stahl eine verbesserte Reinheit aufweist.

Der vorliegenden Erfindung liegt ferner die Aufgabe zugrunde, eine Vorrichtung zur Reduktion von Metalloxid bereitzustellen, mittels dem im Vergleich zu aus dem Stand der Technik bekannten Vorrichtungen eine erhebliche Reduktion der Emission von Treibhausgasen und insbesondere eine Reduktion der Emission von Kohlendioxid realisiert ist.

Diese der vorliegenden Erfindung zugrundeliegende Aufgabe wird durch eine Vorrichtung mit den in Anspruch 12 angegebenen Merkmalen gelöst. Ausgestaltungen der Vorrichtungen sind in den von Anspruch 12 abhängigen Ansprüchen beschrieben.

Im Genaueren wird die der vorliegenden Erfindung zugrundeliegende Aufgabe durch eine Vorrichtung zur Reduktion von Metalloxid mittels eines reduzierenden Gases oder Gasgemisches gelöst, wobei die Vorrichtung dazu ausgebildet ist, das Metalloxid und/oder das zur Reduktion des zu reduzierenden Metalloxids verwendete Gas oder Gasgemisch mittels zumindest teilweise aus konzentrierter Sonnenstrahlung gewonnener Wärmeenergie zu erwärmen, und wobei die Vorrichtung einen Reaktor zur Aufnahme des zu reduzierenden Metalloxids und zur Einleitung von des Gases oder Gasgemisches aufweist.

Die erfindungsgemäße Vorrichtung weist den Vorteil auf, dass zum Erwärmen des zu reduzierenden Metalloxids und/oder des für die Reduktion des zu reduzierenden Metalloxids verwendeten Gases oder Gasgemisches erheblich weniger und gegebenenfalls keine Energie benötigt wird, die aus fossilen Brennstoffen oder mittels Kernkraft gewonnen wird. Folglich wird beim Erwärmen des zu reduzierenden Metalloxids und/oder des für die Reduktion des zu reduzierenden Metalloxids verwendeten Gases oder Gasgemisches erheblich weniger und gegebenenfalls kein Kohlendioxid erzeugt.

Aufgrund der Nutzung von konzentrierter Sonnenstrahlung und somit aufgrund der Nutzung von Solarthermie weist die erfindungsgemäße Vorrichtung einen hohen Wirkungsgrad hinsichtlich des zur Erwärmung genutzten Energieanteils der Sonnenstrahlung auf. Aufgrund der Verwendung von konzentrierter Sonnenstrahlung können im Bereich von oder mehr als 30% der Strahlungsenergie der konzentrierten Sonnenstrahlung zur Erwärmung des zu reduzierenden Metalloxids und/oder des für die Reduktion des zu reduzierenden Metalloxids verwendeten Gases oder Gasgemisches genutzt werden. Dieser Wirkungsgrad ist erheblich höher als bei einer Nutzung von Photovoltaik. Denn bei einer Nutzung von Photovoltaik wird Sonnenlicht zur Erzeugung von elektrischer Energie genutzt, wobei im industriellen Maßstab nutzbare Photovoltaikmodule einen Wirkungsgrad von circa 25% aufweisen. Folglich wird lediglich 25% der Energie der Sonnenstrahlung in elektrische Energie umgewandelt. Diese elektrische Energie muss noch in Wärmeenergie umgewandelt werden, was den Gesamtwirkungsgrad bis zur Erwärmung des zu reduzierenden Metalloxids und/oder des für die Reduktion des zu reduzierenden Metalloxids verwendeten Gases oder Gasgemisches nochmals reduziert.

Vorzugsweise ist die Vorrichtung derart ausgebildet, dass als Metalloxid ein Metalloxid verwendet wird, das ausgewählt ist aus der Gruppe bestehend aus Eisenoxid, Aluminiumoxid, Kupferoxid, Magnesiumoxid, Zinnoxid, Zinkoxid und Mischungen davon. Hinsichtlich der der Zusammensetzung des Metalloxids bestehen somit keine Beschränkungen. Das Metalloxid kann beispielsweise in Form von Eisenerz vorliegen.

Wenn das Metalloxid Eisenoxid aufweist, dann kann das Eisenoxid beispielsweise in Form von Eisenerz vorliegen. In diesem Fall ist es auch möglich, die vorliegende Erfindung als Vorrichtung zum Reduzieren von Eisenerz mittels eines reduzierenden Gases oder Gasgemisches zu bezeichnen.

Vorzugsweise ist die Vorrichtung derart ausgebildet, dass als reduzierende Gas oder Gasgemisch ein Gas oder Gasgemisch verwendet wird, das ausgewählt ist aus der Gruppe bestehend aus Wasserstoff, Kohlenmonoxid, Methan, Alkane, Alkene, Wasserdampf, Wasserstoffträger in Form von Wasserstoffverbindungen und Mischungen hiervon. Zum Beispiel sind Alkane, Alkene, Methan Wasserstoffträger in Form von Wasserstoffverbindungen.

In einer bevorzugten Ausführung der Vorrichtung wird die zum Erwärmen des zu reduzierenden Metalloxids und/oder des Gases oder Gasgemisches verwendete Wärmeenergie in Gänze mittels konzentrierter Sonnenstrahlung gewonnen.

Vorzugsweise ist die Vorrichtung derart ausgebildet, dass der Reaktor dazu ausgebildet ist, mittels aus konzentrierter Sonnenstrahlung gewonnener Wärmeenergie erwärmt zu werden.

Die Vorrichtung weist eine Fluiderwärmungseinrichtung auf, die dazu ausgebildet ist, ein Primär-Wärmetransportfluid mittels konzentrierter Sonnenstrahlung zu erwärmen, wobei der Reaktor dazu ausgebildet ist, Wärme des Primär-Wärmetransportfluids zumindest mittelbar auf das zu reduzierende Metalloxid und/oder auf das zur Reduktion des zu reduzierenden Metalloxids verwendete Gas oder Gasgemisch zu übertragen.

Die entsprechend ausgebildete Vorrichtung weist einen nochmals verbesserten Wirkungsgrad hinsichtlich der Übertragung der Wärmeenergie auf das zu reduzierende Metalloxid und/oder auf das zur Reduktion des zu reduzierenden Metalloxids verwendete Gas oder Gasgemisch auf.

Die Fluiderwärmungseinrichtung ist beispielsweise Teil einer Solarthermieanlage und auf einem Turm angeordnet, der in einem Feld aus Heliostaten angeordnet ist, die Sonnenstrahlung in/auf die Fluiderwärmungseinrichtung reflektieren. Es ist auch möglich, das die Fluiderwärmungseinrichtung im Brennpunkt einer reflektierenden Parabolrinne oder im Brennpunkt einer Fresnelspiegelanordnung oder im Brennpunkt einer Fresnellinsenanordnung angeordnet ist, so dass von der Parabolrinne oder von der Fresnelspiegelanordnung reflektierte Sonnenstrahlung oder von der Fresnellinsenanordnung gesammelte Sonnenstrahlung von dem Primär-Wärmetransportfluid absorbiert werden kann.

Unter einem Reaktor ist eine Einrichtung zu verstehen, in die das zu reduzierende Metalloxid und das zur Reduktion verwendete Gas oder Gasgemisch einleitbar sind. Der Reaktor kann beispielsweise derart ausgebildet sein, dass ein vorgegebener Raumbereich auf eine größere Temperatur als eine den vorgegebenen Raumbereich benachbarten Raumbereich erwärmt werden kann. Beispielsweise ist der Reaktor als Ofen ausgebildet. Der Ofen kann beispielsweise als Drehrohrofen oder als Fließbettreaktor ausgebildet sein. Der Reaktor wird beispielsweise von einem Wärmetransportfluid durchströmt. Erfindungsgemäß bestehen hinsichtlich der Ausgestaltung des Reaktors keinerlei Einschränkungen.

Der Reaktor kann auch als Erwärmungseinrichtung bezeichnet werden.

Die Vorrichtung ist vorzugsweise dazu ausgebildet, das Primär-Wärmetransportfluid mittels der konzentrierten Sonnenstrahlung auf eine Temperatur im Bereich zwischen 500°C bis 1700°C, vorzugsweise im Bereich zwischen 700°C bis 1700°C, weiter vorzugsweise im Bereich zwischen 800°C bis 1650°C, weiter vorzugsweise im Bereich zwischen 900°C bis 1650°C, weiter vorzugsweise im Bereich zwischen 900°C bis 1600°C, weiter vorzugsweise im Bereich zwischen 1100°C bis 1650°C, weiter vorzugsweise im Bereich zwischen 1200°C bis 1600°C, weiter vorzugsweise im Bereich zwischen 1300°C bis 1600°C, weiter vorzugsweise im Bereich zwischen 1400°C bis 1550°C, weiter vorzugsweise im Bereich zwischen 1400°C bis 1500°C zu erwärmen.

Vorzugsweise ist die Vorrichtung derart ausgebildet, dass als Primär-Wärmetransportfluid zumindest ein Gas verwendet wird, ausgewählt aus der Gruppe bestehend aus Wasserstoff, Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Es ist auch möglich, dass das Primär-Wärmetransportfluid eine Salzschmelze aufweist oder eine Salzschmelze ist, wobei die Salzschmelze beispielsweise NaNO₃ und/oder KNO₃ aufweist. Weiter vorzugsweise weist das Primär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist die Vorrichtung derart ausgebildet, dass das Erwärmen des Primär-Wärmetransportfluids unmittelbar in einer von konzentrierter Sonnenstrahlung beschienenen Fluiderwärmungseinrichtung einer Solarthermieanlage erwärmt wird.

Beispielsweise strömt das Primär-Wärmetransportfluid durch die Fluiderwärmungseinrichtung, in die die von Reflektoren reflektierte Sonnenstrahlung konzentriert wird. Dabei wechselwirkt das Primär-Wärmetransportfluid unmittelbar mit der konzentrierten Sonnenstrahlung und wird von dieser erwärmt.

Vorzugsweise ist die Vorrichtung derart ausgebildet, dass ein Primär-Wärmetransportfluid verwendet wird, welches keine Festkörperbestandteile, insbesondere keine Keramikbestandteile aufweist.

Als Primär-Wärmetransportfluid kann beispielsweise ein Gas verwendet werden. Ein Primär-Wärmetransportfluid ohne Festkörperbestandteile weist den Vorteil auf, dass eine Transportvorrichtung (z.B. Rohre bzw. ein Rohrsystem) zum Transport des Wärmetransportfluids einem geringeren Verschleiß ausgesetzt ist. Ferner können sich keine Festkörperbestandteile in Bereichen der Transportvorrichtung ablagern, in denen kleinere Transportgeschwindigkeiten des Wärmetransportfluids vorliegen.

Es ist insbesondere besonders vorteilhaft, wenn das Primär-Wärmetransportfluid keine Keramikbestandteile, insbesondere kein Keramikpulver transportiert. Denn Keramikbestandteile führen zu einem besonders hohen Verschleiß der Transportvorrichtung.

Der Reaktor kann derart ausgebildet sein, dass das Primär-Wärmetransportfluid durch den Reaktor transportiert wird, wobei der Reaktor die so erhaltene Wärmeenergie auf das Metalloxid und/oder das für die Reduktion des zu reduzierenden Metalloxids verwendete Gas oder Gasgemisch (beispielsweise mittels Wärmestrahlung) überträgt.

Ferner kann der Reaktor derart ausgebildet sein, dass das Primär-Wärmetransportfluid direkt mit dem Metalloxid und/oder dem Gas oder Gasgemisch in Wechselwirkung und/oder in Kontakt bringbar ist, um die Wärmeenergie auf das Metalloxid und/oder auf das Gas oder Gasgemisch zu übertragen.

Vorzugsweise weist die Vorrichtung eine Wärmespeichereinrichtung auf, wobei die Vorrichtung dazu ausgebildet ist, Wärmeenergie des Primär-Wärmetransportfluids zumindest mittelbar auf die Wärmespeichereinrichtung zu übertragen.

Die entsprechend ausgebildete Vorrichtung weist den Vorteil auf, dass die Wärmeenergie, die mittels der konzentrierten Sonnenstrahlung gewonnen wird, auch in Zeitperioden verwendet werden kann, in denen keine oder eine vergleichsweise geringere Sonnenstrahlung zur Verfügung steht. Somit ist eine gleichmäßigere Erwärmung des zu reduzierenden Metalloxids und/oder des für die Reduktion des zu reduzierenden Metalloxids verwendeten Gases oder Gasgemisches ermöglicht.

Beispielsweise ist die Vorrichtung derart ausgebildet, dass zum Übertragen von Wärmeenergie der Wärmespeichereinrichtung auf das zu reduzierende Metalloxid und/oder auf das für die Reduktion des zu reduzierenden Metalloxids verwendete Gas oder Gasgemisch das Primär-Wärmetransportfluid verwendet wird.

Als Wärmespeichereinrichtung kann beispielsweise ein Reservoir des Primär-Wärmetransportfluids dienen. Ferner kann beispielsweise ein sich von dem Primär-Wärmetransportfluid unterscheidendes Wärmetransportfluid (beispielsweise eine Salzschmelze, beispielsweise NaNO₃ und/oder KNO₃ aufweisend) als Wärmespeichereinrichtung verwendet werden. Ferner kann beispielsweise ein Festkörper als Wärmespeichereinrichtung verwendet werden. Hinsichtlich der Ausgestaltung des Festkörpers bestehen keine Einschränkungen. Der Festkörper kann beispielsweise Steine und/oder Beton und/oder Metallkörper oder dergleichen aufweisen.

Ferner ist es auch im Sinne der erfindungsgemäßen Vorrichtung, dass Wärmeenergie des Primär-Wärmetransportfluids auf ein Sekundär-Wärmetransportfluid und/oder auf ein Tertiär-Wärmetransportfluid übertragen wird, wobei anschließend Wärmeenergie des Sekundär-Wärmetransportfluids und/oder des Tertiär-Wärmetransportfluids auf eine Wärmespeichereinrichtung übertragen wird.

Somit wird die Wärmeenergie des Primär-Wärmetransportfluids mittelbar auf die Wärmespeichereinrichtung übertragen.

Die Vorrichtung weist eine Wärmetauschereinrichtung auf, mittels der Wärmeenergie des Primär-Wärmetransportfluids auf ein Sekundär-Wärmetransportfluid übertragbar ist, wobei der Reaktor dazu ausgebildet ist, Wärme des Sekundär-Wärmetransportfluids zumindest mittelbar auf das zu reduzierende Metalloxid und/oder auf das zur Reduktion des zu reduzierenden Metalloxids verwendete Gas oder Gasgemisch zu übertragen.

Die entsprechend ausgebildete Vorrichtung weist den Vorteil auf, dass die Wärmeenergie des Primär-Wärmetransportfluids für die Erwärmung des zu reduzierenden Metalloxids und/oder für die Erwärmung des zu dessen Reduktion verwendeten Gases oder Gasgemisches, die auf eine bedeutend niedrigere Temperatur als eine Temperatur des Primär-Wärmetransportfluids erwärmt werden sollen, verbessert nutzbar ist. Denn die Temperatur des Sekundär-Wärmetransportfluids ist niedriger als die Temperatur des Primär-Wärmetransportfluids.

Wie bereits oben beschrieben kann die Wärmespeichereinrichtung mittels des Sekundär-Wärmetransportfluids erwärmt werden. Ferner ist es auch möglich, dass eine erste Wärmespeichereinrichtung mittels des Primär-Wärmetransportfluids und eine zweite Wärmespeichereinrichtung mittels des Sekundär-Wärmetransportfluids erwärmt wird. Folglich wäre die erste Wärmespeichereinrichtung in einem Primär-Fluidkreislauf und die zweite Wärmespeichereinrichtung in einem Sekundär-Fluidkreislauf angeordnet.

Beispielsweise weist das Sekundär-Wärmetransportfluid eine Salzschmelze auf oder ist eine Salzschmelze, wobei die Salzschmelze beispielsweise NaNO₃ und/oder KNO₃ aufweist. Weiter vorzugsweise weist das Sekundär-Wärmetransportfluid eine Metallschmelze auf oder ist eine Metallschmelze. Beispielsweise weist die Metallschmelze Zinn und/oder Zink und/oder Aluminium und/oder Blei auf.

Der Reaktor kann derart ausgebildet sein, dass das Sekundär-Wärmetransportfluid durch den Reaktor transportiert wird, wobei der Reaktor die so erhaltene Wärmeenergie auf das Metalloxid und/oder das für die Reduktion des Metalloxids verwendete Gas oder Gasgemisch (beispielsweise mittels Wärmestrahlung) überträgt.

Ferner kann der Reaktor derart ausgebildet sein, dass das Sekundär-Wärmetransportfluid direkt mit dem zu reduzierenden Metalloxid und/oder das für dessen Reduzierung vorgesehene Gas oder Gasgemisch in Wechselwirkung und/oder in Kontakt bringbar ist, um die Wärmeenergie auf das zu reduzierende Metalloxid und/oder das Gas oder Gasgemisch zu übertragen.

Vorzugsweise ist die Vorrichtung derart ausgebildet, dass die Fluiderwärmungseinrichtung mit der Wärmetauschereinrichtung mittels des in einem Primär-Fluidkreislauf zirkulierendem Primär-Wärmetransportfluid wärmegekoppelt ist, wobei die Wärmetauschereinrichtung mit dem Reaktor mittels des in einem Sekundär-Fluidkreislauf zirkulierendem Sekundär-Wärmetransportfluid wärmegekoppelt ist, wobei eine Primär-Fluidzulaufleitung des Primär-Fluidkreislaufs, über die das Primär-Wärmetransportfluid von der Fluiderwärmungseinrichtung in Richtung der Wärmetauschereinrichtung transportiert wird, eine erste Länge aufweist, und wobei eine Sekundär-Fluidzulaufleitung des Sekundär-Fluidkreislaufs, über die das Sekundär-Wärmetransportfluid von der Wärmetauschereinrichtung in Richtung des Reaktors transportiert wird, eine zweite Länge aufweist, die größer als die erste Länge ist.

Die entsprechend ausgebildete Vorrichtung ermöglicht einen effizienten Transport der mittels konzentrierter Sonnenstrahlung erzeugten Wärmeenergie mit geringen Wärmeenergieverlusten über eine große Distanz. Folglich ermöglicht die entsprechend ausgebildete Vorrichtung, dass eine Fluiderwärmungseinrichtung, die dazu ausgebildet ist, ein Primär-Wärmetransportfluid mittels konzentrierter Sonnenstrahlung zu erwärmen, einen größeren Abstand zu dem Reaktor, in dem das zu reduzierende Metalloxid und/oder das zur Reduktion des zu reduzierenden Metalloxids verwendete Gas oder Gasgemisch mittels der durch konzentrierte Sonnenstrahlung gewonnenen Energie erwärmt wird, aufweisen kann.

Dies ist insbesondere vorteilhaft, wenn die konzentrierte Sonnenstrahlung eines Solarturmkraftwerks zum Erwärmen des Primär-Wärmetransportfluids verwendet wird. Ein Solarturmkraftwerk weist eine Fluiderwärmungseinrichtung auf, die auf einem Turmbauwerk angeordnet ist. Die Fluiderwärmungseinrichtung wird auch als Receiver und/oder als Absorberstation und/oder als Brennkammer bezeichnet. Unterhalb der Fluiderwärmungseinrichtung sind eine Vielzahl von Reflektoreinrichtungen angeordnet, die auch als Heliostaten bezeichnet werden, mittels denen die Sonnenstrahlung auf die Fluiderwärmungseinrichtung reflektiert wird. Die Reflektoreinrichtungen belegen eine große Fläche um das Turmbauwerk herum, so dass ein Reaktor zum Erwärmen des zu reduzierende Metalloxids und/oder des zur Reduktion des zu reduzierenden Metalloxids verwendete Gas oder Gasgemisch üblicherweise außerhalb einer Fläche platziert werden kann, in der die Reflektoreinrichtungen angeordnet sind. Folglich ermöglicht die beschriebene Vorrichtung eine Vergrößerung des Abstandes Fluiderwärmungseinrichtung zum Reaktor.

Vorzugsweise ist die erste Länge kürzer als 1000 Meter. Weiter vorzugsweise ist die erste Länge kürzer als 800 Meter. Weiter vorzugsweise ist die erste Länge kürzer als 600 Meter. Weiter vorzugsweise ist die erste Länge kürzer als 400 Meter. Weiter vorzugsweise ist die erste Länge kürzer als 200 Meter.

Vorzugsweise beträgt die erste Länge zwischen 100 Meter und 1000 Meter. Weiter vorzugsweise beträgt die erste Länge zwischen 110 Meter und 900 Meter. Weiter vorzugsweise beträgt die erste Länge zwischen 120 Meter und 800 Meter. Weiter vorzugsweise beträgt die erste Länge zwischen 130 Meter und 700 Meter. Weiter vorzugsweise beträgt die erste Länge zwischen 140 Meter und 600 Meter. Weiter vorzugsweise beträgt die erste Länge zwischen 150 Meter und 500 Meter. Weiter vorzugsweise beträgt die erste Länge zwischen 160 Meter und 400 Meter. Weiter vorzugsweise beträgt die erste Länge zwischen 170 Meter und 300 Meter. Weiter vorzugsweise beträgt die erste Länge zwischen 180 Meter und 200 Meter.

Vorzugsweise weist die Vorrichtung eine dritte Wärmetauschereinrichtung auf, mittels der Wärmeenergie des Sekundär-Wärmetransportfluids auf ein Tertiär-Wärmetransportfluid übertragbar ist, wobei der Reaktor dazu ausgebildet ist, Wärme des Tertiär-Wärmetransportfluids zumindest mittelbar auf das zu reduzierende Metalloxid und/oder auf das zur Reduktion des zu reduzierenden Metalloxids verwendete Gas oder Gasgemisch zu übertragen.

Beispielsweise wird als Tertiär-Wärmetransportfluid ein Gas verwendet, ausgewählt aus der Gruppe bestehend aus Wasserstoff, Kohlendioxid, Wasserdampf, Methan, Ammoniak, Kohlenmonoxid, Schwefeldioxid, Schwefeltrioxid, Salzsäure, Stickstoffmonooxid, Stickstoffdioxid, Stickstoff, Luft und Mischungen davon.

Beispielsweise weist das Tertiär-Wärmetransportfluid eine Salzschmelze auf oder ist eine Salzschmelze, beispielsweise NaNO₃ und/oder KNO₃ aufweisend.

Weiter vorzugsweise weist das Tertiär-Wärmetransportfluid eine Metallschmelze auf oder ist eine Metallschmelze. Beispielsweise weist die Metallschmelze Zinn und/oder Zink und/oder Aluminium und/oder Blei auf.

Vorzugsweise ist die Vorrichtung derart ausgebildet, dass als Tertiär-Wärmetransportfluid ein Wärmetransportfluid verwendet wird, dessen Wärmekapazität sich von der Wärmekapazität des Sekundär-Wärmetransportfluids unterscheidet.

Weiter vorzugsweise ist die Vorrichtung derart ausgebildet, dass als Tertiär-Wärmetransportfluid ein Wärmetransportfluid verwendet wird, dessen Dichte sich von der Wärmekapazität des Sekundär-Wärmetransportfluids unterscheidet.

Weiter vorzugsweise ist die Vorrichtung derart ausgebildet, dass als Tertiär-Wärmetransportfluid ein Wärmetransportfluid verwendet wird, dessen Wärmekapazität und/oder dessen Dichte kleiner als die Wärmekapazität des Sekundär-Wärmetransportfluids ist.

Weiter vorzugsweise ist die Vorrichtung derart ausgebildet, dass als Tertiär-Wärmetransportfluid ein Wärmetransportfluid verwendet wird, dessen Wärmekapazität und/oder dessen Dichte größer als die Wärmekapazität des Sekundär-Wärmetransportfluids ist.

Vorzugsweise ist die Vorrichtung derart ausgebildet, dass der Reaktor einen ersten Bereich zum Zuführen des zur Reduktion des zu reduzierenden Metalloxids verwendeten Gases oder Gasgemisches in den Reaktor, einen zweiten Bereich zum Zuführen des zu reduzierenden Metalloxids in den Reaktor und einen dritten Bereich zum zumindest teilweisen Abführen des durch die Redoxreaktion des Metalloxids und des Gases oder Gasgemisches erzeugten Reaktionsprodukts aus dem Reaktor aufweist, wobei der zweite Bereich im Betriebszustand des Reaktors unterhalb des ersten Bereichs angeordnet ist, und wobei der dritte Bereich im Betriebszustand des Reaktors unterhalb des zweiten Bereichs angeordnet ist.

Das bei der Redoxreaktion erzeugte Reaktionsprodukt weist eine größere Dichte als das Gas oder Gasgemisch auf. Ferner weist das Reaktionsprodukt eine geringere Temperatur als das Gas oder Gasgemisch auf. Durch Abführen des Reaktionsproduktes in dem dritten Bereich des Reduktionsreaktors wird ein Abkühlen des Gases oder Gsgemisches verhindert bzw. entgegengewirkt, so dass die entsprechend ausgebildete Vorrichtung eine effizientere und schnellere Reduktion des Metalloxids ermöglicht.

Das Reaktionsprodukt kann Wasser bzw. Wasserdampf sein. Bei der Reduktion von Eisenoxid mittels Wasserstoffs entsteht beispielsweise Wasser als Reaktionsprodukt.

Weitere Vorteile, Einzelheiten und Merkmale der Erfindung ergeben sich nachfolgend aus den erläuterten Ausführungsbeispielen. Dabei zeigen im Einzelnen:
- Figur 1:: zeigt ein Verfahrensablaufdiagramm eines erfindungsgemäßen Verfahrens zur Reduktion von Metalloxid mittels eines reduzierenden Gases oder Gasgemisches unter Verwendung von konzentrierter Sonnenstrahlung;
- Figur 2:: zeigt ein Verfahrensablaufdiagramm einer weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 3:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 4:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 5:: zeigt ein Verfahrensablaufdiagramm einer nochmals weiteren Ausführungsform des erfindungsgemäßen Verfahrens zur Reduktion von Metalloxid mittels eines reduzierenden Gases oder Gasgemisches unter Verwendung von konzentrierter Sonnenstrahlung;
- Figur 6:: zeigt einen schematischen Aufbau einer Vorrichtung zur Reduktion von Metalloxid mittels eines reduzierenden Gases oder Gasgemisches unter Verwendung von konzentrierter Sonnenstrahlung;
- Figur 7:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer weiteren Ausführungsform der vorliegenden Erfindung;
- Figur 8:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung;
- Figur 9:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung;
- Figur 10:: zeigt einen schematischen Aufbau einer Vorrichtung zur Reduktion von Metalloxid mittels eines reduzierenden Gases oder Gasgemisches unter Verwendung von konzentrierter Sonnenstrahlung gemäß einer nochmals weiteren Ausführungsform der vorliegenden Erfindung; und
- Figur 11:: zeigt den schematischen Aufbau eines Reaktors einer Vorrichtung zur Reduktion von Metalloxid mittels eines reduzierenden Gases oder Gasgemisches.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

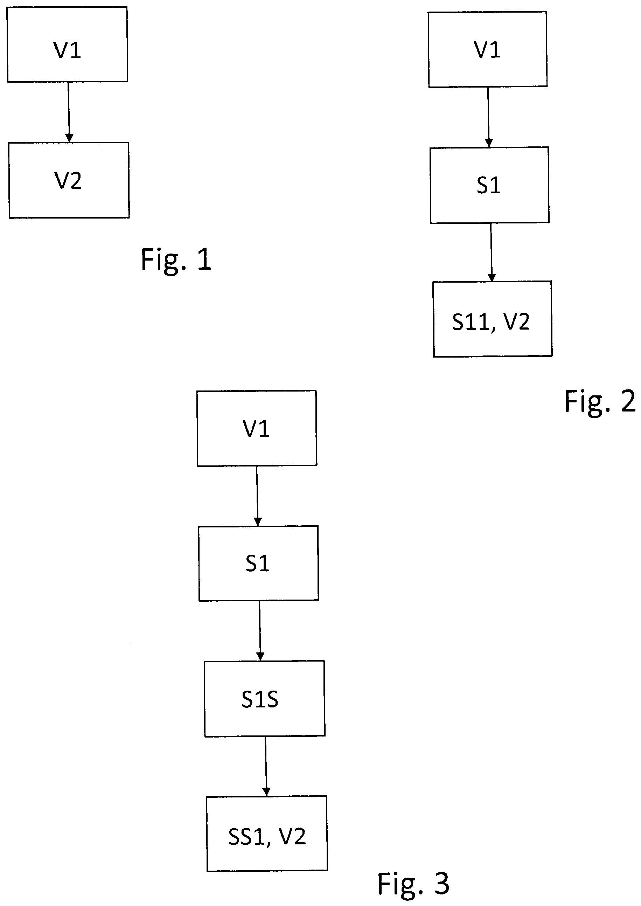

Figur 1 zeigt ein Verfahrensablaufdiagramm eines erfindungsgemäßen Verfahrens zur Reduktion von Metalloxid M1 mittels eines reduzierenden Gases oder Gasgemisches unter Verwendung von konzentrierter Sonnenstrahlung.

In einem Verfahrensschritt V1 wird das zu reduzierende Metalloxid M1 und das zur Reduktion des zu reduzierenden Metalloxids M1 verwendete Gas oder Gasgemisch zusammengeführt. In einem sich dem Verfahrensschritt V1 anschließenden Verfahrensschritt V2 wird das Metalloxid M1 und/oder das für die Reduktion des zu reduzierenden Metalloxids M1 verwendete Gas oder Gasgemisch erwärmt, wobei Wärmeenergie, die zum Erwärmen V2 des zu reduzierenden Metalloxids M1 und/oder des für die Reduktion des zu reduzierenden Metalloxids M1 verwendeten Gases oder Gasgemisches verwendet wird, zumindest teilweise mittels konzentrierter Sonnenstrahlung gewonnen wird.

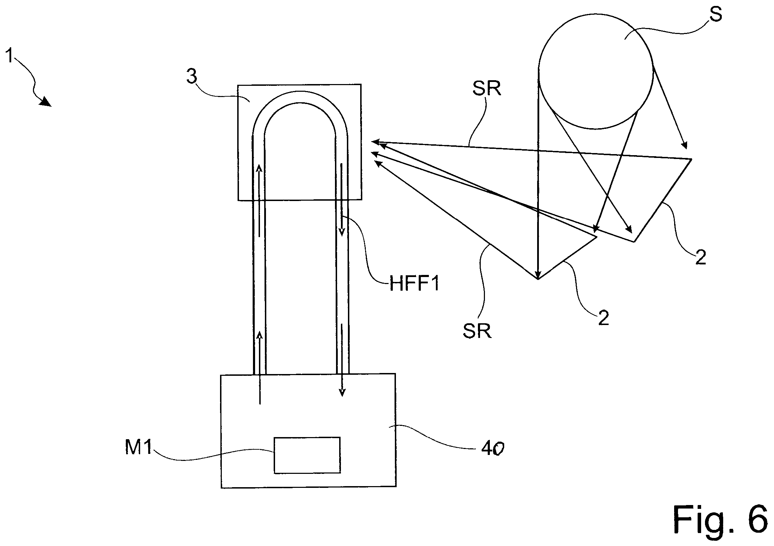

Figur 2 zeigt ein Verfahrensablaufdiagramm einer weiteren Ausführungsform des erfindungsgemäßen Verfahrens zur Reduktion von Metalloxid M1 mittels eines reduzierenden Gases oder Gasgemisches unter Verwendung von konzentrierter Sonnenstrahlung. Das Verfahren kann auf jeder der in den Figuren 6 bis 10 dargestellten Vorrichtungen 1 zur Reduktion von Metalloxid M1 mittels eines reduzierenden Gases oder Gasgemisches unter Verwendung von konzentrierter Sonnenstrahlung ausgeführt werden.

Wie bereits oben beschrieben werden in dem Verfahrensschritt V1 das zu reduzierende Metalloxid M1 und das zur Reduktion des zu reduzierenden Metalloxids M1 verwendete Gas oder Gasgemisch zusammengeführt. In einem Verfahrensschritt S1 wird ein Primär-Wärmetransportfluid HTF1 mittels konzentrierter Sonnenstrahlung erwärmt. Hierzu weist die Vorrichtung 1 eine Fluiderwärmungseinrichtung 3 auf, die dazu ausgebildet ist, ein Primär-Wärmetransportfluid HTF1 mittels konzentrierter Sonnenstrahlung zu erwärmen.

In den in den Figuren 6 bis 10 dargestellten Ausführungsbeispielen der Vorrichtung 1 ist die Fluiderwärmungseinrichtung 3 als Absorberstation 3 ausgebildet, in der von der Sonne S emittierte Sonnenstrahlung SR konzentriert wird. Hierzu wird die Sonnenstrahlung SR von als Heliostaten 2 ausgebildete Reflektionseinrichtungen 2 auf/in die Fluiderwärmungseinrichtung 3 reflektiert. Das Primär-Wärmetransportfluid HTF1 durchläuft die Fluiderwärmungseinrichtung 3 und wird so durch die konzentrierte Sonnenstrahlung SR erwärmt.

Die Vorrichtung 1 weist ferner eine als Reaktor 40 ausgebildete Erwärmungseinrichtung 40 auf, die dazu ausgebildet ist, gemäß eines Verfahrensschritts S11 Wärme des Primär-Wärmetransportfluids HTF1 zumindest mittelbar auf das Metalloxid M1 und/oder auf das zur Reduktion des zu reduzierenden Metalloxids M1 verwendete Gas oder Gasgemisch zu übertragen. Hierzu zirkuliert das Primär-Wärmetransportfluid HTF1 zwischen der Fluiderwärmungseinrichtung 3 und dem Reaktor 40. Folglich wird das Metalloxid M1 und/oder das für die Reduktion des zu reduzierenden Metalloxids M1 verwendete Gas oder Gasgemisch erwärmt, was dem obigen Verfahrensschritt V2 entspricht.

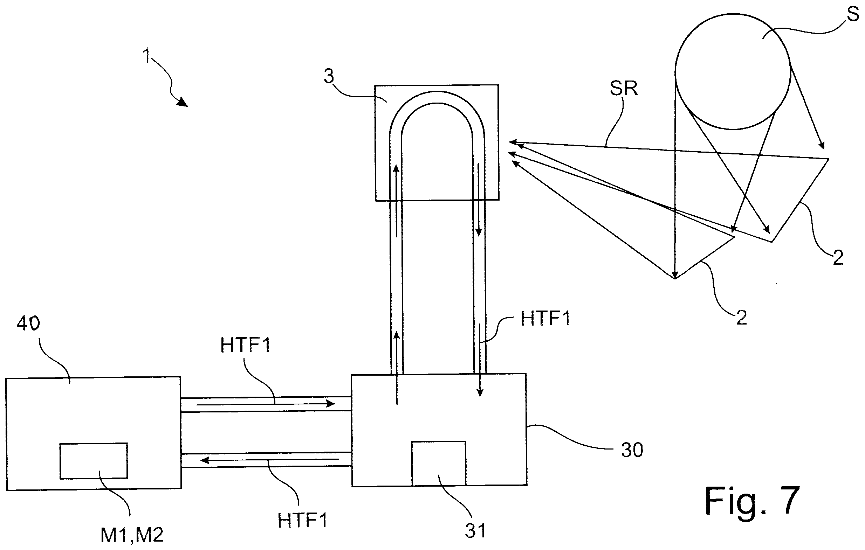

Die in Figur 7 dargestellte Vorrichtung 1 ist dazu ausgebildet, das Verfahren auszuführen, dessen Verfahrensablaufdiagramm in Figur 3 dargestellt ist. Die Verfahrensschritte V1 und S1 sind die gleichen wie bei dem Verfahren, dessen Verfahrensablaufdiagramm in Figur 2 dargestellt ist, so dass auf die diesbezügliche obige Beschreibung verwiesen wird. Die in Figur 7 dargestellte Vorrichtung 1 unterscheidet sich von der in Figur 6 dargestellten Vorrichtung 1 dadurch, dass diese eine Wärmespeichereinrichtung 30 aufweist, wobei in einem Verfahrensschritt S1S Wärmeenergie des Primär-Wärmetransportfluids HTF1 zumindest mittelbar auf die Wärmespeichereinrichtung 30 übertragen wird. In der Wärmespeichereinrichtung 30 ist ein Wärmespeichermedium 31 angeordnet, welches vorzugsweise eine große Wärmekapazität aufweist. Das Primär-Wärmetransportfluid HTF1 kann jedoch auch als Wärmespeichermedium 31 fungieren. Die Wärmespeichereinrichtung 30 wiederum ist mit dem Reaktor 40 wärmegekoppelt, indem ein Wärmetransportfluid zwischen der Wärmespeichereinrichtung 30 und dem Reaktor 40 zirkuliert. Im dargestellten Ausführungsbeispiel zirkuliert das Primär-Wärmetransportfluid HTF1 zwischen der Wärmespeichereinrichtung 30 und dem Reaktor 40, so dass gemäß einem Verfahrensschritt SS1 Wärmeenergie der Wärmespeichereinrichtung 30 auf das Metalloxid M1 und/oder auf das für die Reduktion des zu reduzierenden Metalloxids M1 verwendete Gas oder Gasgemisch übertragen wird. Folglich wird das Metalloxid M1 und/oder das für die Reduktion des zu reduzierenden Metalloxids M1 verwendete Gas oder Gasgemisch erwärmt, was dem obigen Verfahrensschritt V2 entspricht.

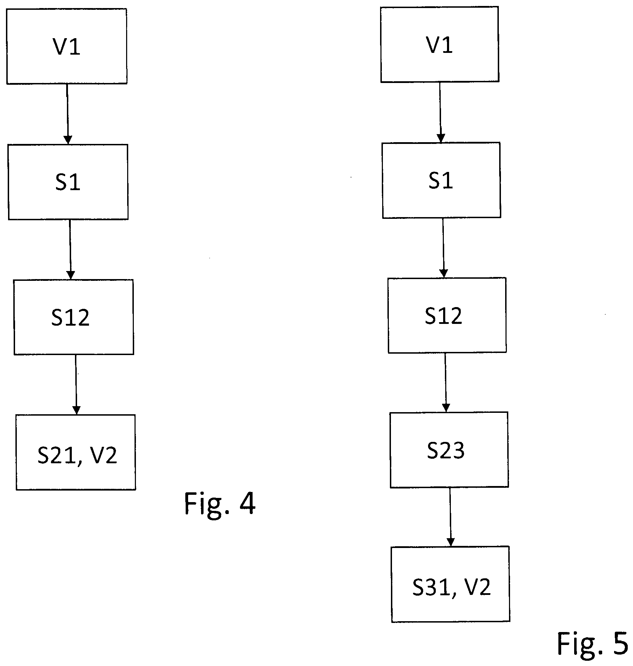

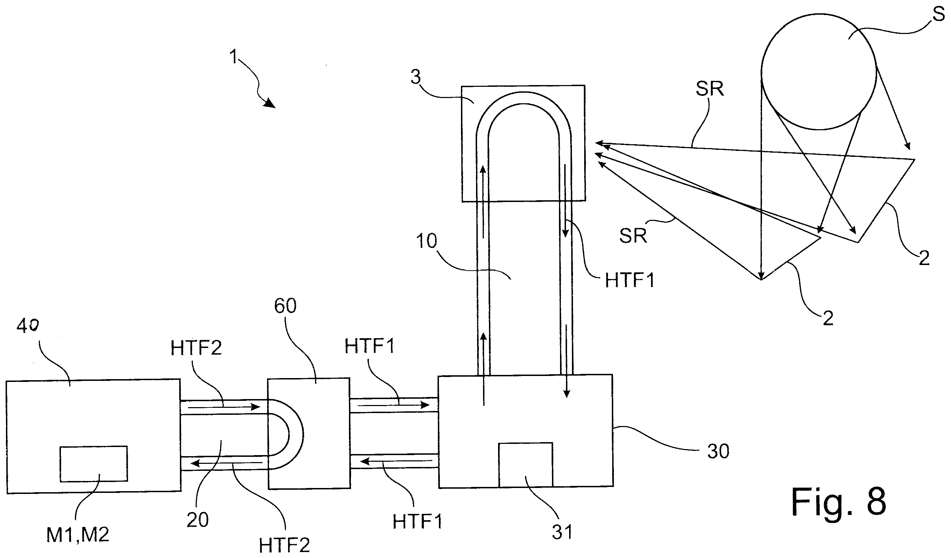

Die in Figur 8 dargestellte Vorrichtung 1 ist dazu ausgebildet, das Verfahren auszuführen, dessen Verfahrensablaufdiagramm in Figur 4 dargestellt ist. Die Verfahrensschritte V1 und S1 sind die gleichen wie bei dem Verfahren, dessen Verfahrensablaufdiagramm in Figur 2 dargestellt ist, so dass auf die diesbezügliche obige Beschreibung verwiesen wird. Die in Figur 8 dargestellte Vorrichtung 1 unterscheidet sich von der in Figur 7 dargestellten Vorrichtung 1 dadurch, dass die Vorrichtung 1 eine Wärmetauschereinrichtung 60 aufweist, mittels der in einem Verfahrensschritt S12 Wärmeenergie des Primär-Wärmetransportfluids HTF1 auf ein Sekundär-Wärmetransportfluid HTF2 übertragbar ist. Hierzu ist die Fluiderwärmungseinrichtung 3 mit der Wärmetauschereinrichtung 60 mittels des in einem Primär-Fluidkreislauf 10 zirkulierendem Primär-Wärmetransportfluid HTF1 wärmegekoppelt. Der Reaktor 40 ist dazu ausgebildet, in einem Verfahrensschritt S21 Wärme des Sekundär-Wärmetransportfluids HTF2 zumindest mittelbar auf das Metalloxid M1 und/oder auf das für die Reduktion des zu reduzierenden Metalloxids M1 verwendete Gas oder Gasgemisch zu übertragen. Hierzu ist die Wärmetauschereinrichtung 60 mit dem Reaktor 40 mittels des in einem Sekundär-Fluidkreislauf 20 zirkulierendem Sekundär-Wärmetransportfluid HTF2 wärmegekoppelt. Folglich wird das Metalloxid M1 und/oder das für die Reduktion des zu reduzierenden Metalloxids M1 verwendete Gas oder Gasgemisch erwärmt, was dem obigen Verfahrensschritt V2 entspricht.

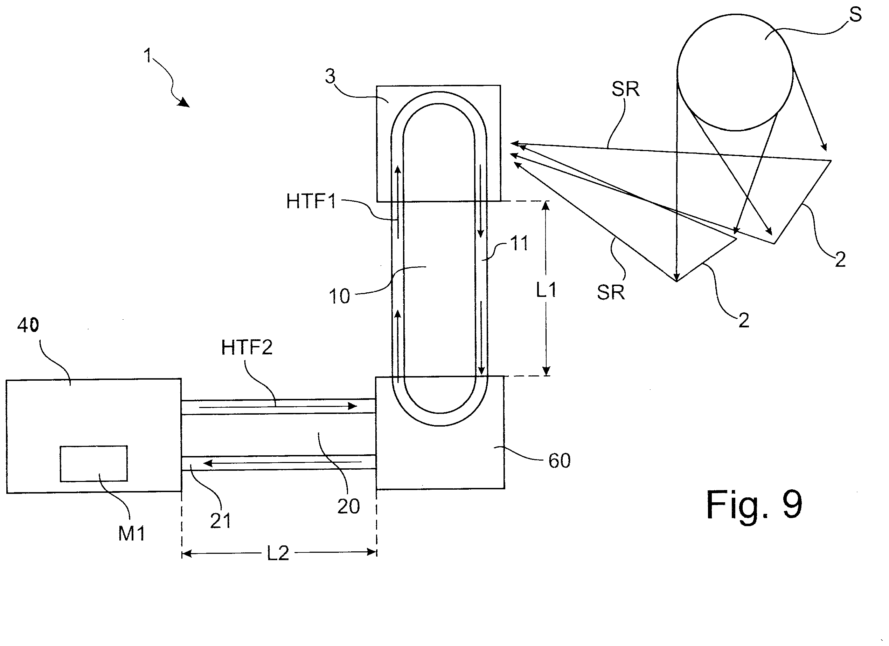

Die in Figur 9 dargestellte Vorrichtung 1 unterscheidet sich von der in Figur 8 dargestellten Vorrichtung 1 dadurch, dass diese keine Wärmespeichereinrichtung 30 aufweist, die zwischen der Fluiderwärmungseinrichtung 3 und der Wärmetauschereinrichtung 60 angeordnet ist. Jedoch kann die in Figur 9 dargestellte Vorrichtung 1 auch die Wärmespeichereinrichtung 30 aufweisen, die die zwischen der Fluiderwärmungseinrichtung 3 und der Wärmetauschereinrichtung 60 angeordnet ist.

Aus Figur 9 ist ersichtlich, dass eine Primär-Fluidzulaufleitung 11 des Primär-Fluidkreislaufs 10, über die das Primär-Wärmetransportfluid HTF1 von der Fluiderwärmungseinrichtung 3 in Richtung der Wärmetauschereinrichtung 60 transportiert wird, eine erste Länge L1 aufweist. Ferner ist aus Figur 9 ersichtlich, dass eine Sekundär-Fluidzulaufleitung 21 des Sekundär-Fluidkreislaufs 20, über die das Sekundär-Wärmetransportfluid HTF2 von der Wärmetauschereinrichtung 60 in Richtung des Reaktors 40 transportiert wird, eine zweite Länge L2 aufweist, die größer als die erste Länge L1 ist.

Folglich wird das Primär-Wärmetransportfluid HTF1 zu der Wärmetauschereinrichtung 60 über eine erste Wegstrecke L1 transportiert, wobei in der Wärmetauschereinrichtung 60 Wärmeenergie von dem Primär-Wärmetransportfluid HTF1 auf das Sekundär-Wärmetransportfluid HTF2 übertragen wird. Ferner wird des Sekundär-Wärmetransportfluids HTF2 zu dem Reaktor 40 über eine zweite Wegstrecke L2 transportiert, die größer als die erste Wegstrecke L1 ist, wobei in dem Reaktor 40 Wärmeenergie von dem Sekundär-Wärmetransportfluid HTF2 auf das Metalloxid M1 und/oder auf das für die Reduktion des zu reduzierenden Metalloxids M1 verwendete Gas oder Gasgemisch übertragen wird.

Vorzugsweise wird als Sekundär-Wärmetransportfluid HTF2 ein Wärmetransportfluid verwendet, dessen Wärmekapazität größer ist als die Wärmekapazität des Primär-Wärmetransportfluids HTF1. Weiter vorzugsweise wird als Sekundär-Wärmetransportfluid HTF2 ein Wärmetransportfluid verwendet, dessen spezifische Wärmekapazität größer ist als die spezifische Wärmekapazität des Primär-Wärmetransportfluids HTF1. Weiter vorzugsweise wird als Sekundär-Wärmetransportfluid HTF2 ein Wärmetransportfluid verwendet, dessen Dichte größer ist als die Dichte des Primär-Wärmetransportfluids HTF1. Weiter vorzugsweise wird als Sekundär-Wärmetransportfluid HTF2 ein Wärmetransportfluid verwendet, dessen Produkt aus dessen Dichte und dessen Wärmekapazität größer ist als die das Produkt aus der Dichte und der Wärmekapazität des Primär-Wärmetransportfluids HTF1.

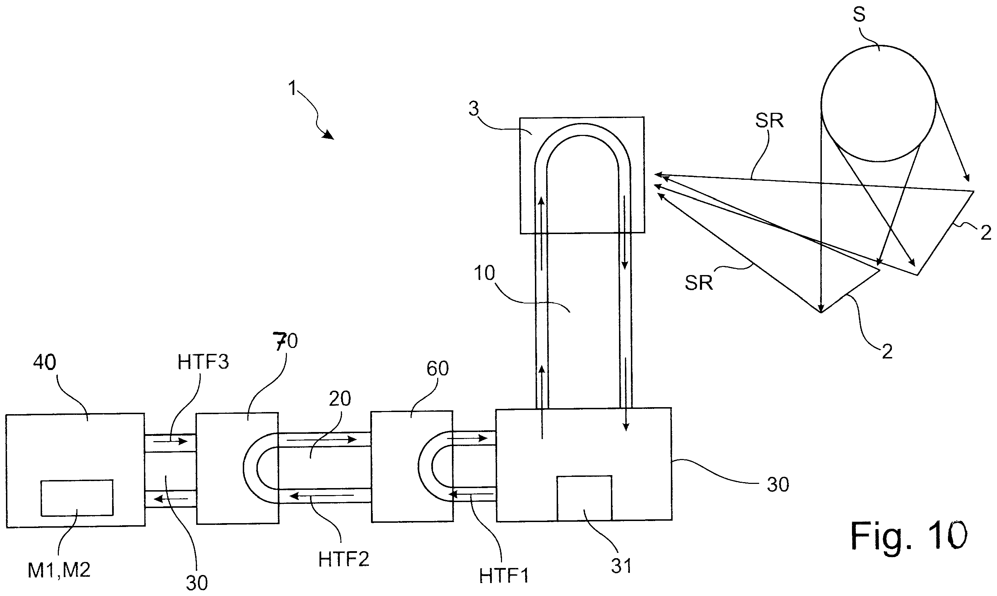

Die Vorrichtung 1, die in Figur 10 dargestellt ist, kann entsprechend ausgebildet sein, so dass die mit Bezug auf Figur 9 beschriebenen Längenverhältnisse der ersten Längen L1 der Primär-Fluidzulaufleitungen 11 und der zweiten Längen L2 der Sekundär-Fluidzulaufleitungen 21 auch bei dem in Figur 10 dargestellten Ausführungsbeispiel der Vorrichtung 1 realisiert sein können.

Die in Figur 10 dargestellte Vorrichtung 1 ist dazu ausgebildet, das Verfahren auszuführen, dessen Verfahrensablaufdiagramm in Figur 5 dargestellt ist. Die Verfahrensschritte V1, S1 und S12 sind die gleichen wie bei dem Verfahren, dessen Verfahrensablaufdiagramm in Figur 4 dargestellt ist, so dass auf die diesbezügliche obige Beschreibung verwiesen wird. Die in Figur 10 dargestellte Vorrichtung 1 unterscheidet sich von der in Figur 8 dargestellten Vorrichtung 1 dadurch, dass die Vorrichtung 1 zusätzlich eine zweite Wärmetauschereinrichtung 70 aufweist. In einem Verfahrensschritt S23 wird in der zweiten Wärmetauschereinrichtung 70 Wärmeenergie des Sekundär-Wärmetransportfluids HTF2 auf ein Tertiär-Wärmetransportfluid HTF3 übertragen. Die Erwärmungseinrichtung 40 ist dazu ausgebildet, gemäß eines Verfahrensschritts S31 Wärme des Tertiär-Wärmetransportfluids HTF3 zumindest mittelbar auf das Metalloxid M1 und/oder auf das für die Reduktion des zu reduzierenden Metalloxids M1 verwendete Gas oder Gasgemisch zu übertragen. Folglich wird das Metalloxid M1 und/oder das für die Reduktion des zu reduzierenden Metalloxids M1 verwendete Gas oder Gasgemisch erwärmt, was dem obigen Verfahrensschritt V2 entspricht.

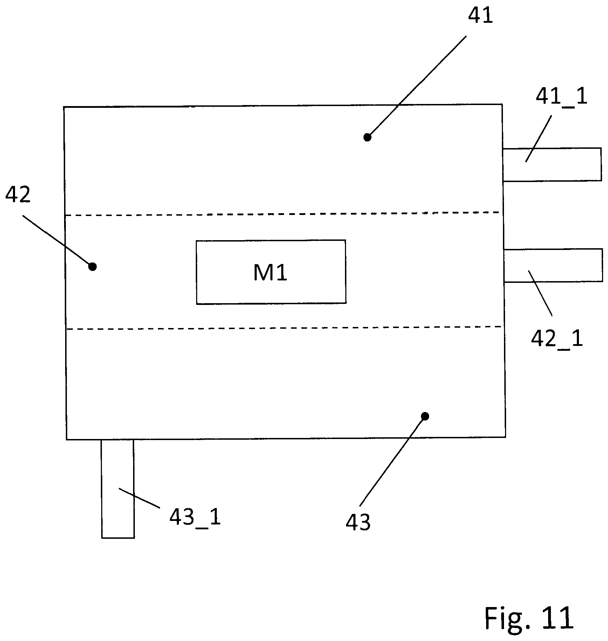

Figur 11 zeigt einen Reaktor 40, der in jeder der in den Figuren 6 bis 10 dargestellten Vorrichtungen 1 verwendbar ist. Der Reaktor 40 weist einen ersten Bereich 41 zum Zuführen des zur Reduktion des zu reduzierenden Metalloxids M1 verwendeten Gases oder Gasgemisches in den Reaktor 40 auf. Hierzu weist der Reaktor 40 einen in den ersten Bereich 41 mündenden Zufuhranschluss 41_1 auf. Ferner weist der Reaktor 40 einen zweiten Bereich 42 zum Zuführen des zu reduzierenden Metalloxids M1 in den Reaktor (40) auf, wobei der zweite Bereich 42 im Betriebszustand des Reaktors 40 unterhalb des ersten Bereichs 41 angeordnet ist. Hierzu weist der Reaktor 40 einen in den zweiten Bereich 42 mündenden Zufuhranschluss 42_1 auf. Weiterhin weist der Reaktor 4) einen dritten Bereich 43 zum zumindest teilweisen Abführen des durch die Redoxreaktion des Metalloxids M1 und des Gases oder Gasgemisches erzeugten Reaktionsproduktes aus dem Reaktor 40 auf, wobei der dritte Bereich im Betriebszustand des Reaktors 40 unterhalb des zweiten Bereichs 42 angeordnet ist. Hierzu weist der Reaktor 40 einen in den dritten Bereich 43 mündenden Abfuhranschluss 43_1 auf.

Die oben beschriebenen Verfahren zur Reduktion von Metalloxid M1 mittels eines reduzierenden Gases oder Gasgemisches sind bei Verwendung einer Vorrichtung 1, in der der in Figur 11 dargestellte Reaktor 40 verwendet wird, derart ausgebildet, dass das zur Reduktion des zu reduzierenden Metalloxids M1 verwendete Gas oder Gasgemisch dem Reaktor 40 in dem ersten Bereich 41 des Reaktors 40 über den Zufuhranschluss 41_1 zugeführt wird. Ferner wird das zu reduzierende Metalloxid M1 dem Reaktor 40 in dem zweiten Bereich 42 des Reaktors 40 über den Zufuhranschluss 42_1 zugeführt. Das durch die Redoxreaktion des Metalloxids M1 und des Gases oder Gasgemisches erzeugte Reaktionsprodukt wird über den Abfuhranschluss 43_1 aus dem Reaktor 40 in dem dritten Bereich 43 zumindest teilweise abgeführt.

Das bei der Redoxreaktion erzeugte Reaktionsprodukt weist eine größere Dichte als das Gas oder Gasgemisch auf. Ferner weist das Reaktionsprodukt eine geringere Temperatur als das Gas oder Gasgemisch auf. Durch Abführen des Reaktionsproduktes in dem dritten Bereich 43 des Reaktors 40 wird ein Abkühlen des Gases oder Gasgemisches verhindert bzw. entgegengewirkt, so dass das entsprechend ausgebildete Verfahren eine effizientere und schnellere Reduktion des Metalloxids M1 ermöglicht.

Das Reaktionsprodukt kann Wasser bzw. Wasserdampf sein. Bei der Reduktion von Eisenoxid M1 mittels Wasserstoffs entsteht beispielsweise Wasser als Reaktionsprodukt.

### Bezugszeichenliste

- 1: Vorrichtung
- 2: Reflektionseinrichtung / Heliostat
- 3: Fluiderwärmungseinrichtung
- 10: Primär-Fluidkreislauf
- 11: Primär-Fluidzulaufleitung
- 12: Primär-Fluidablaufleitung
- 20: Sekundär-Fluidkreislauf
- 21: Sekundär-Fluidzulaufleitung
- 22: Sekundär-Fluidablaufleitung
- 30: Wärmespeichereinrichtung
- 31: Wärmespeichermedium
- 40: Erwärmungseinrichtung / Reaktor
- 41: erster Bereich (der Erwärmungseinrichtung / des Reaktors)
- 41_1: Zufuhranschluss (des ersten Bereichs)
- 42: zweiter Bereich (der Erwärmungseinrichtung / des Reaktors)
- 42_1: Zufuhranschluss (des zweiten Bereichs)
- 43: dritter Bereich (der Erwärmungseinrichtung / des Reaktors)
- 43_1: Abfuhranschluss (des dritten Bereichs)
- 60: erste Wärmetauschereinrichtung
- 70: zweite Wärmetauschereinrichtung

- HTF1: Primär-Wärmetransportfluid
- HTF2: Sekundär-Wärmetransportfluid
- HTF3: Tertiär-Wärmetransportfluid

- M1: Metalloxid

- L1: erste Wegstrecke / erste Länge
- L2: zweite Wegstrecke / zweite Länge
- S: Sonne
- SR: Sonnenstrahlung

- S1: Verfahrensschritt
- S11: Verfahrensschritt
- S1S: Verfahrensschritt
- S21: Verfahrensschritt
- S23: Verfahrensschritt
- S31: Verfahrensschritt
- SS1: Verfahrensschritt
- V1: Verfahrensschritt
- V2: Verfahrensschritt

## Patentansprüche

1. Verfahren zur Reduktion von Metalloxid (M1) mittels eines reduzierenden Gases oder Gasgemisches, die folgenden Verfahrensschritte aufweisend:
- Zusammenführen (V1) des zu reduzierenden Metalloxids (M1) und des zur Reduktion des zu reduzierenden Metalloxids (M1) verwendeten Gases oder Gasgemisches;
- Erwärmen (V2) des Metalloxids (M1) und/oder des für die Reduktion des zu reduzierenden Metalloxids verwendeten Gases oder Gasgemisches,
wobei
- die zum Erwärmen (V2) des zu reduzierenden Metalloxids (M1) und/oder des für die Reduktion des zu reduzierenden Metalloxids verwendeten Gases oder Gasgemisches verwendete Wärmeenergie zumindest teilweise mittels konzentrierter Sonnenstrahlung gewonnen wird,
wobei das Verfahren **dadurch gekennzeichnet ist, dass** das für die Reduktion des Metalloxids verwendete Gas oder Gasgemisch mehr als 10% Wasserstoffgas aufweist.

2. Verfahren nach Anspruch 1, **gekennzeichnet durch** die folgenden Merkmale:
- Erwärmen (S1) eines Primär-Wärmetransportfluids (HTF1) mittels konzentrierter Sonnenstrahlung;
- Übertragen (S11, SS1, S21, S31) von Wärmeenergie des Primär-Wärmetransportfluids (HTF1) auf das zu reduzierende Metalloxid (M1) und/oder auf das für die Reduktion des zu reduzierenden Metalloxids verwendeten Gases oder Gasgemisches.

3. Verfahren nach Anspruch 2, **gekennzeichnet durch** die folgenden Merkmale:
- Übertragen (S1S) von Wärmeenergie des Primär-Wärmetransportfluids (HTF1) auf eine Wärmespeichereinrichtung (30); und
- Übertragen (SS1) von Wärmeenergie der Wärmespeichereinrichtung (30) auf das zu reduzierende Metalloxid (M1) und/oder auf das für die Reduktion des zu reduzierenden Metalloxids (M1) verwendete Gas oder Gasgemisch.

4. Verfahren nach einem der Ansprüche 2 oder 3, **gekennzeichnet durch** die folgenden Merkmale:
- Übertragen (S12) von Wärmeenergie des Primär-Wärmetransportfluids (HTF1) auf ein Sekundär-Wärmetransportfluid (HTF2) in einer Wärmetauschereinrichtung (60); und
- Übertragen (S21) von Wärmeenergie des Sekundär-Wärmetransportfluids (HTF2) auf das zu reduzierende Metalloxid (M1) und/oder auf das für die Reduktion des zu reduzierenden Metalloxids (M1) verwendete Gas oder Gasgemisch in einer Erwärmungseinrichtung (40).

5. Verfahren nach Anspruch 4, **dadurch gekennzeichnet, dass** als Sekundär-Wärmetransportfluid (HTF2) ein Wärmetransportfluid verwendet wird, dessen Wärmekapazität größer ist als die Wärmekapazität des Primär-Wärmetransportfluids (HTF1).

6. Verfahren nach einem der Ansprüche 4 oder 5, **gekennzeichnet durch** die folgenden Schritte:
- Transportieren des Primär-Wärmetransportfluids (HTF1) zu der Wärmetauschereinrichtung (60) über eine erste Wegstrecke (L1), wobei in der Wärmetauschereinrichtung (60) Wärmeenergie von dem Primär-Wärmetransportfluid (HTF1) auf das Sekundär-Wärmetransportfluid (HTF2) übertragen wird; und
- Transportieren des Sekundär-Wärmetransportfluids (HTF2) zu der Erwärmungseinrichtung (40) über eine zweite Wegstrecke (L2), die größer als die erste Wegstrecke (L1) ist, wobei in der Erwärmungseinrichtung (40) Wärmeenergie von dem Sekundär-Wärmetransportfluid (HTF2) auf das Metalloxid (M1) und/oder auf das für die Reduktion des zu reduzierenden Metalloxids (M1) verwendete Gas oder Gasgemisch übertragen wird.

7. Verfahren nach einem der Ansprüche 4 bis 6, **gekennzeichnet durch** die folgenden Merkmale:
- Übertragen (S23) von Wärmeenergie des Sekundär-Wärmetransportfluids (HTF2) auf ein Tertiär-Wärmetransportfluid (HTF3) in einer zweiten Wärmetauschereinrichtung (70); und
- Übertragen (S31) von Wärmeenergie des Tertiär-Wärmetransportfluids (HTF3) auf das zu reduzierende Metalloxid (M1) und/oder auf das für die Reduktion des zu reduzierenden Metalloxids (M1) verwendete Gas oder Gasgemisch in die Erwärmungseinrichtung (40).

8. Verfahren nach Anspruch 7, **dadurch gekennzeichnet, dass** als Tertiär-Wärmetransportfluid (HTF3) ein Wärmetransportfluid verwendet wird, dessen Wärmekapazität sich von der Wärmekapazität des Sekundär-Wärmetransportfluids (HTF2) unterscheidet.

9. Verfahren nach einem der vorhergehenden Ansprüchen, **dadurch gekennzeichnet, dass** die mittels konzentrierter Sonnenstrahlung gewonnene Wärmeenergie einem Reaktor (40) zugeführt wird, in dem das zu reduzierende Metalloxid (M1) und das für die Reduktion des zu reduzierenden Metalloxids (M1) verwendete Gas oder Gasgemisch zusammengeführt werden.

10. Verfahren nach Anspruch 9, **gekennzeichnet durch** die folgenden Merkmale:
- das zur Reduktion des zu reduzierenden Metalloxids (M1) verwendete Gas oder Gasgemisch wird dem Reaktor (40) in einem ersten Bereich (41) des Reaktors (40) zugeführt;
- das zu reduzierende Metalloxid (M1) wird dem Reaktor (40) in einem zweiten Bereich (42) des Reaktors (40) zugeführt, der im Betriebszustand des Reaktors (40) unterhalb des ersten Bereichs (41) angeordnet ist; und
- das durch die Redoxreaktion des Metalloxids (M1) und des Gases oder Gasgemisches erzeugte Reaktionsprodukt wird aus dem Reaktor (40) in einem dritten Bereich (43) zumindest teilweise abgeführt, wobei der dritte Bereich im Betriebszustand des Reaktors (40) unterhalb des zweiten Bereichs (42) angeordnet ist.

11. Verfahren nach einem der vorhergehenden Ansprüche, **dadurch gekennzeichnet, dass** dem zu reduzierenden Metalloxid (M1) zusätzlich zum Gas oder Gasgemisch noch Kohlenmonoxid und/oder Kohlendioxid und/oder Methan und/oder ein Alkan und/oder Wasser zugeführt werden.

12. Vorrichtung (1) zur Reduktion von Metalloxid (M1) mittels eines reduzierenden Gases oder Gasgemisches, wobei die Vorrichtung (1) folgende Merkmale aufweist:
- die Vorrichtung (1) ist dazu ausgebildet, das Metalloxid (M1) und/oder das zur Reduktion des zu reduzierenden Metalloxids (M1) verwendete Gas oder Gasgemisch mittels zumindest teilweise aus konzentrierter Sonnenstrahlung gewonnener Wärmeenergie zu erwärmen;
- die Vorrichtung (1) weist einen Reaktor (40) zur Aufnahme des zu reduzierenden Metalloxids (M1) und zur Einleitung des Gases oder Gasgemisches auf;
- die Vorrichtung (1) weist eine Fluiderwärmungseinrichtung (3) auf, die dazu ausgebildet ist, ein Primär-Wärmetransportfluid (HTF1) mittels konzentrierter Sonnenstrahlung zu erwärmen;
- der Reaktor (40) ist dazu ausgebildet, Wärme des Primär-Wärmetransportfluids (HTF1) zumindest mittelbar auf das zu reduzierende Metalloxid (M1) und/oder auf das zur Reduktion des zu reduzierenden Metalloxids (M1) verwendete Gas oder Gasgemisch zu übertragen;
- die Vorrichtung (1) weist eine Wärmetauschereinrichtung (60) auf, mittels der Wärmeenergie des Primär-Wärmetransportfluids (HTF1) auf ein Sekundär-Wärmetransportfluid (HTF2) übertragbar ist; und
- der Reaktor (40) ist dazu ausgebildet, Wärme des Sekundär-Wärmetransportfluids (HTF2) zumindest mittelbar auf das zu reduzierende Metalloxid (M1) und/oder auf das zur Reduktion des zu reduzierenden Metalloxids (M1) verwendete Gas oder Gasgemisch zu übertragen.

13. Vorrichtung (1) nach Anspruch 12, **dadurch gekennzeichnet, dass** der Reaktor (40) dazu ausgebildet ist, mittels aus konzentrierter Sonnenstrahlung gewonnener Wärmeenergie erwärmt zu werden.

14. Vorrichtung (1) nach Anspruch 12 oder 13, **dadurch gekennzeichnet, dass** die Vorrichtung (1) eine Wärmespeichereinrichtung (30) aufweist, wobei die Vorrichtung (1) dazu ausgebildet ist, Wärmeenergie des Primär-Wärmetransportfluids (HTF1) zumindest mittelbar auf die Wärmespeichereinrichtung (30) zu übertragen.

15. Vorrichtung (1) nach einem der Ansprüche 12 bis 14, **gekennzeichnet durch** die folgenden Merkmale:
- die Fluiderwärmungseinrichtung (3) ist mit der Wärmetauschereinrichtung (60) mittels des in einem Primär-Fluidkreislauf (10) zirkulierendem Primär-Wärmetransportfluid (HTF1) wärmegekoppelt;
- die Wärmetauschereinrichtung (60) ist mit dem Reaktor (40) mittels des in einem Sekundär-Fluidkreislauf (20) zirkulierendem Sekundär-Wärmetransportfluid (HTF2) wärmegekoppelt;
- eine Primär-Fluidzulaufleitung (11) des Primär-Fluidkreislaufs (10), über die das Primär-Wärmetransportfluid (HTF1) von der Fluiderwärmungseinrichtung (3) in Richtung der Wärmetauschereinrichtung (60) transportiert wird, weist eine erste Länge (L1) auf;
- eine Sekundär-Fluidzulaufleitung (21) des Sekundär-Fluidkreislaufs (20), über die das Sekundär-Wärmetransportfluid (HTF2) von der Wärmetauschereinrichtung (60) in Richtung des Reaktors (40) transportiert wird, weist eine zweite Länge (L2) auf, die größer als die erste Länge (L1) ist.

16. Vorrichtung (1) nach einem der Ansprüche 12 bis 15, **gekennzeichnet durch** die folgenden Merkmale:
- die Vorrichtung (1) weist eine zweite Wärmetauschereinrichtung (70) auf, mittels der Wärmeenergie des Sekundär-Wärmetransportfluids (HTF2) auf ein Tertiär-Wärmetransportfluid (HTF3) übertragbar ist; und
- der Reaktor (40) ist dazu ausgebildet, Wärme des Tertiär-Wärmetransportfluids (HTF3) zumindest mittelbar auf das zu reduzierende Metalloxid (M1) und/oder auf das zur Reduktion des zu reduzierenden Metalloxids (M1) verwendete Gas oder Gasgemisch zu übertragen.

17. Vorrichtung (1) nach einem der Ansprüche 12 bis 16, **gekennzeichnet durch** die folgenden Merkmale:
- der Reaktor (40) weist einen ersten Bereich (41) zum Zuführen des zur Reduktion des zu reduzierenden Metalloxids (M1) verwendeten Gases oder Gasgemisches in den Reaktor (40) auf;
- der Reaktor (40) weist einen zweiten Bereich (42) zum Zuführen des zu reduzierenden Metalloxids (M1) in den Reaktor (40) auf, wobei der zweite Bereich (42) im Betriebszustand des Reaktors (40) unterhalb des ersten Bereichs (41) angeordnet ist; und
- der Reaktor (40) weist einen dritten Bereich (43) zum zumindest teilweisen Abführen des durch die Redoxreaktion des Metalloxids (M1) und des Gases oder Gasgemisches erzeugten Reaktionsproduktes aus dem Reaktor (40) auf, wobei der dritte Bereich im Betriebszustand des Reaktors (40) unterhalb des zweiten Bereichs (42) angeordnet ist.

## Claims

1. Process for reducing metal oxide (M1) by means of a reducing gas or gas mixture, having the following process steps:
- combining (V1) the metal oxide (M1) to be reduced and the gas or gas mixture used to reduce the metal oxide (M1) to be reduced;
- heating (V2) the metal oxide (M1) and/or the gas or gas mixture used for the reduction of the metal oxide to be reduced,
wherein
- the heat energy used to heat (V2) the metal oxide (M1) to be reduced and/or to heat the gas or gas mixture used for the reduction of the metal oxide to be reduced is produced at least partially by means of concentrated solar radiation,
wherein the process is **characterized in that** the gas or gas mixture used for the reduction of the metal oxide contains more than 10% hydrogen gas.

2. Process according to claim 1, **characterized by** the following features:
- heating (S1) a primary heat transfer fluid (HTF1) by means of concentrated solar radiation;
- transferring (S11, SS1, S21, S31) heat energy from the primary heat transfer fluid (HTF1) to the metal oxide (M1) to be reduced and/or to the gas or gas mixture used for the reduction of the metal oxide to be reduced.

3. Process according to claim 2, **characterized by** the following features:
- transferring (S1S) heat energy from the primary heat transfer fluid (HTF1) to a heat storage device (30); and
- transferring (SS1) heat energy from the heat storage device (30) to the metal oxide (M1) to be reduced and/or to the gas or gas mixture used for the reduction of the metal oxide (M1) to be reduced.

4. Process according to either of claims 2 and 3, **characterized by** the following features:
- transferring (S12) heat energy from the primary heat transfer fluid (HTF1) to a secondary heat transfer fluid (HTF2) in a heat exchanger device (60); and
- transferring (S21) heat energy from the secondary heat transfer fluid (HTF2) to the metal oxide (M1) to be reduced and/or to the gas or gas mixture used for the reduction of the metal oxide (M1) to be reduced, in a heating device (40).

5. Process according to claim 4, **characterized in that** a heat transfer fluid with a greater heat capacity than the heat capacity of the primary heat transfer fluid (HTF1) is used as the secondary heat transfer fluid (HTF2).

6. Process according to either of claims 4 and 5, **characterized by** the following steps:
- transporting the primary heat transfer fluid (HTF1) to the heat exchanger device (60) via a first path (L1), wherein in the heat exchanger device (60) heat energy is transferred from the primary heat transfer fluid (HTF1) to the secondary heat transfer fluid (HTF2); and
- transporting the secondary heat transfer fluid (HTF2) to the heating device (40) via a second path (L2) which is larger than the first path (L1), wherein in the heating device (40) heat energy is transferred from the secondary heat transfer fluid (HTF2) to the metal oxide (M1) and/or to the gas or gas mixture used for the reduction of the metal oxide (M1) to be reduced.

7. Process according to any of claims 4 to 6, **characterized by** the following features:
- transferring (S23) heat energy from the secondary heat transfer fluid (HTF2) to a tertiary heat transfer fluid (HTF3) in a second heat exchanger device (70); and
- transferring (S31) heat energy from the tertiary heat transfer fluid (HTF3) to the metal oxide (M1) to be reduced and/or to the gas or gas mixture used for the reduction of the metal oxide (M1) to be reduced, in the heating device (40).

8. Process according to claim 7, **characterized in that** a heat transfer fluid with a heat capacity that differs from the heat capacity of the secondary heat transfer fluid (HTF2) is used as the tertiary heat transfer fluid (HTF3).

9. Process according to any of the preceding claims, **characterized in that** the heat energy produced by means of concentrated solar radiation is supplied to a reactor (40) in which the metal oxide (M1) to be reduced and the gas or gas mixture used for the reduction of the metal oxide (M1) to be reduced are combined.

10. Process according to claim 9, **characterized by** the following features:
- the gas or gas mixture used to reduce the metal oxide (M1) to be reduced is fed to the reactor (40) in a first region (41) of the reactor (40);
- the metal oxide (M1) to be reduced is fed to the reactor (40) in a second region (42) of the reactor (40), which is located below the first region (41) in the operating state of the reactor (40); and
- the reaction product generated by the redox reaction of the metal oxide (M1) with the gas or gas mixture is at least partially discharged from the reactor (40) in a third region (43), wherein the third region is located below the second region (42) in the operating state of the reactor (40).

11. Process according to any of the preceding claims, **characterized in that** in addition to the gas or gas mixture, carbon monoxide and/or carbon dioxide and/or methane and/or an alkane and/or water are fed to the metal oxide (M1) to be reduced.

12. Apparatus (1) for reducing metal oxide (M1) by means of a reducing gas or gas mixture, wherein the apparatus (1) has the following features:
- the apparatus (1) is designed to heat the metal oxide (M1) and/or the gas or gas mixture used to reduce the metal oxide (M1) to be reduced, by means of heat energy produced at least partially from concentrated solar radiation;
- the apparatus (1) has a reactor (40) for receiving the metal oxide (M1) to be reduced and for introducing the gas or gas mixture;
- the apparatus (1) has a fluid heating device (3) designed to heat a primary heat transfer fluid (HTF1) by means of concentrated solar radiation;
- the reactor (40) is designed to transfer heat from the primary heat transfer fluid (HTF1) at least indirectly to the metal oxide (M1) to be reduced and/or to the gas or gas mixture used to reduce the metal oxide (M1) to be reduced;
- the apparatus (1) has a heat exchanger device (60) by means of which heat energy from the primary heat transfer fluid (HTF1) can be transferred to a secondary heat transfer fluid (HTF2); and
- the reactor (40) is designed to transfer heat from the secondary heat transfer fluid (HTF2) at least indirectly to the metal oxide (M1) to be reduced and/or to the gas or gas mixture used to reduce the metal oxide (M1) to be reduced.

13. Apparatus (1) according to claim 12, **characterized in that** the reactor (40) is designed to be heated by means of heat energy produced from concentrated solar radiation.

14. Apparatus (1) according to claim 12 or 13, **characterized in that** the apparatus (1) has a heat storage device (30), wherein the apparatus (1) is designed to transfer heat energy from the primary heat transfer fluid (HTF1) at least indirectly to the heat storage device (30).

15. Apparatus (1) according to any of claims 12 to 14, **characterized by** the following features:
- the fluid heating device (3) is thermally coupled to the heat exchanger device (60) by means of the primary heat transfer fluid (HTF1) circulating in a primary fluid circuit (10);
- the heat exchanger device (60) is thermally coupled to the reactor (40) by means of the secondary heat transfer fluid (HTF2) circulating in a secondary fluid circuit (20);
- a primary fluid inlet line (11) of the primary fluid circuit (10), via which line the primary heat transfer fluid (HTF1) is transported from the fluid heating device (3) toward the heat exchanger device (60), has a first length (L1);
- a secondary fluid inlet line (21) of the secondary fluid circuit (20), via which line the secondary heat transfer fluid (HTF2) is transported from the heat exchanger device (60) toward the reactor (40), has a second length (L2) that is greater than the first length (L1).

16. Apparatus (1) according to any of claims 12 to 15, **characterized by** the following features:
- the apparatus (1) has a second heat exchanger device (70) by means of which the heat energy from the secondary heat transfer fluid (HTF2) can be transferred to a tertiary heat transfer fluid (HTF3); and
- the reactor (40) is designed to transfer heat from the tertiary heat transfer fluid (HTF3) at least indirectly to the metal oxide (M1) to be reduced and/or to the gas or gas mixture used to reduce the metal oxide (M1) to be reduced.

17. Apparatus (1) according to any of claims 12 to 16, **characterized by** the following features:
- the reactor (40) has a first region (41) for feeding the gas or gas mixture used to reduce the metal oxide (M1) to be reduced into the reactor (40);
- the reactor (40) has a second region (42) for feeding the metal oxide (M1) to be reduced into the reactor (40), wherein the second region (42) is located below the first region (41) in the operating state of the reactor (40); and
- the reactor (40) has a third region (43) for at least partially discharging the reaction product generated by the redox reaction of the metal oxide (M1) with the gas or gas mixture from the reactor (40), wherein the third region is located below the second region (42) in the operating state of the reactor (40).

## Revendications

1. Procédé pour la réduction d'oxyde métallique (M1) au moyen d'un gaz ou mélange de gaz réducteur, présentant les étapes de procédé suivantes :
- réunion (V1) de l'oxyde métallique (M1) à réduire et du gaz ou mélange de gaz utilisé pour la réduction de l'oxyde métallique (M1) à réduire ;
- chauffage (V2) de l'oxyde métallique (M1) et/ou du gaz ou mélange de gaz utilisé pour la réduction de l'oxyde métallique à réduire,
dans lequel
- l'énergie thermique utilisée pour le chauffage (V2) de l'oxyde métallique (M1) à réduire et/ou du gaz ou mélange de gaz utilisé pour la réduction de l'oxyde métallique à réduire est obtenue au moins partiellement au moyen d'un rayonnement solaire concentré,
dans lequel le procédé est **caractérisé en ce que** le gaz ou mélange de gaz utilisé pour la réduction de l'oxyde métallique présente plus de 10 % d'hydrogène gazeux.

2. Procédé selon la revendication 1, **caractérisé par** les caractéristiques suivantes :
- chauffage (S1) d'un fluide de transport de chaleur primaire (HTF1) au moyen d'un rayonnement solaire concentré ;
- transfert (S11, SS1, S21, S31) de l'énergie thermique du fluide de transport de chaleur primaire (HTF1) à l'oxyde métallique (M1) à réduire et/ou au gaz ou mélange de gaz utilisé pour la réduction de l'oxyde métallique à réduire.

3. Procédé selon la revendication 2, **caractérisé par** les caractéristiques suivantes :
- transfert (S1S) de l'énergie thermique du fluide de transport de chaleur primaire (HTF1) à un appareil d'accumulation de chaleur (30) ; et
- transfert (SS1) de l'énergie thermique de l'appareil d'accumulation de chaleur (30) à l'oxyde métallique (M1) à réduire et/ou au gaz ou mélange de gaz utilisé pour la réduction de l'oxyde métallique (M1) à réduire.

4. Procédé selon l'une des revendications 2 ou 3, **caractérisé par** les caractéristiques suivantes :
- transfert (S12) de l'énergie thermique du fluide de transport de chaleur primaire (HTF1) à un fluide de transport de chaleur secondaire (HTF2) dans un appareil d'échange de chaleur (60) ; et
- transfert (S21) de l'énergie thermique du fluide de transport de chaleur secondaire (HTF2) à l'oxyde métallique (M1) à réduire et/ou au gaz ou mélange de gaz utilisé pour la réduction de l'oxyde métallique (M1) à réduire dans un appareil de chauffage (40).

5. Procédé selon la revendication 4, **caractérisé en ce qu'**un fluide de transport de chaleur dont la capacité thermique est supérieure à la capacité thermique du fluide de transport de chaleur primaire (HTF1) est utilisé comme fluide de transport de chaleur secondaire (HTF2).

6. Procédé selon l'une des revendications 4 ou 5, **caractérisé par** les caractéristiques suivantes :
- transport du fluide de transport de chaleur primaire (HTF1) vers l'appareil d'échange de chaleur (60) sur une première distance (L1), dans lequel, dans l'appareil d'échange de chaleur (60), l'énergie thermique est transférée du fluide de transport de chaleur primaire (HTF1) au fluide de transport de chaleur secondaire (HTF2) ; et
- transport du fluide de transport de chaleur secondaire (HTF2) vers l'appareil de chauffage (40) sur une seconde distance (L2) qui est supérieure à la première distance (L1), dans lequel, dans l'appareil de chauffage (40), de l'énergie thermique est transférée du fluide de transport de chaleur secondaire (HTF2) à l'oxyde métallique (M1) et/ou au gaz ou mélange de gaz utilisé pour la réduction de l'oxyde métallique (M1) à réduire.

7. Procédé selon l'une des revendications 4 à 6, **caractérisé par** les caractéristiques suivantes :
- transfert (S23) de l'énergie thermique du fluide de transport de chaleur secondaire (HTF2) à un fluide de transport de chaleur tertiaire (HTF3) dans un second appareil d'échange de chaleur (70) ; et - transfert (S31) de l'énergie thermique du fluide de transport de chaleur tertiaire (HTF3) à l'oxyde métallique (M1) à réduire et/ou au gaz ou mélange de gaz utilisé pour la réduction de l'oxyde métallique (M1) à réduire dans l'appareil de chauffage (40).

8. Procédé selon la revendication 7, **caractérisé en ce qu'**un fluide de transport de chaleur dont la capacité thermique est différente de la capacité thermique du fluide de transport de chaleur secondaire (HTF2) est utilisé comme fluide de transport de chaleur tertiaire (HTF3).

9. Procédé selon l'une des revendications précédentes,
**caractérisé en ce que** l'énergie thermique obtenue au moyen d'un rayonnement solaire concentré est amenée à un réacteur (40) dans lequel l'oxyde métallique (M1) à réduire et le gaz ou mélange de gaz utilisé pour la réduction de l'oxyde métallique (M1) à réduire sont réunis.

10. Procédé selon la revendication 9, **caractérisé par** les caractéristiques suivantes :
- le gaz ou mélange de gaz utilisé pour la réduction de l'oxyde métallique (M1) à réduire est amené au réacteur (40) dans une première zone (41) du réacteur (40) ;
- l'oxyde métallique (M1) à réduire est amené au réacteur (40) dans une deuxième zone (42) du réacteur (40) qui, dans l'état de fonctionnement du réacteur (40), est disposée en dessous de la première zone (41) ; et
- le produit de réaction généré par la réaction d'oxydoréduction de l'oxyde métallique (M1) et du gaz ou mélange de gaz est évacué au moins partiellement du réacteur (40) dans une troisième zone (43), dans lequel la troisième zone est disposée, dans l'état de fonctionnement du réacteur (40), en dessous de la deuxième zone (42).

11. Procédé selon l'une des revendications précédentes,
**caractérisé en ce que,** outre le gaz ou mélange de gaz, du monoxyde de carbone et/ou du dioxyde de carbone et/ou du méthane et/ou un alcane et/ou de l'eau sont amenés à l'oxyde métallique (M1) à réduire.

12. Dispositif (1) pour la réduction d'oxyde métallique (M1) au moyen d'un gaz ou mélange de gaz réducteur, dans lequel le dispositif (1) présente les caractéristiques suivantes :
- le dispositif (1) est conçu pour chauffer l'oxyde métallique (M1) et/ou le gaz ou mélange de gaz utilisé pour la réduction de l'oxyde métallique (M1) à réduire au moyen d'une énergie thermique obtenue au moins partiellement à partir d'un rayonnement solaire concentré ;
- le dispositif (1) présente un réacteur (40) pour la réception de l'oxyde métallique (M1) à réduire et pour l'introduction du gaz ou mélange de gaz ;
- le dispositif (1) présente un appareil de chauffage de fluide (3) qui est conçu pour chauffer un fluide de transport de chaleur primaire (HTF1) au moyen d'un rayonnement solaire concentré ;
- le réacteur (40) est conçu pour transférer la chaleur du fluide de transport de chaleur primaire (HTF1) au moins indirectement à l'oxyde métallique (M1) à réduire et/ou au gaz ou mélange de gaz utilisé pour la réduction de l'oxyde métallique (M1) à réduire ;
- le dispositif (1) présente un appareil d'échange de chaleur (60) au moyen duquel l'énergie thermique du fluide de transport de chaleur primaire (HTF1) peut être transférée à un fluide de transport de chaleur secondaire (HTF2) ; et
- le réacteur (40) est conçu pour transférer la chaleur du fluide de transport de chaleur secondaire (HTF2) au moins indirectement à l'oxyde métallique (M1) à réduire et/ou au gaz ou mélange de gaz utilisé pour la réduction de l'oxyde métallique (M1) à réduire.

13. Dispositif (1) selon la revendication 12, **caractérisé en ce que** le réacteur (40) est conçu pour être chauffé au moyen d'une énergie thermique obtenue à partir d'un rayonnement solaire concentré.

14. Dispositif (1) selon la revendication 12 ou 13, **caractérisé en ce que** le dispositif (1) présente un appareil d'accumulation de chaleur (30), dans lequel le dispositif (1) est conçu pour transférer de l'énergie thermique du fluide de transport de chaleur primaire (HTF1) au moins indirectement à l'appareil d'accumulation de chaleur (30).

15. Dispositif (1) selon l'une des revendications 12 à 14, **caractérisé par** les caractéristiques suivantes :
- l'appareil de chauffage de fluide (3) est accouplé thermiquement à l'appareil d'échange de chaleur (60) au moyen du fluide de transport de chaleur primaire (HTF1) circulant dans un circuit de fluide primaire (10) ;
- l'appareil d'échange de chaleur (60) est accouplé thermiquement au réacteur (40) au moyen du fluide de transport de chaleur secondaire (HTF2) circulant dans un circuit de fluide secondaire (20) ;
- une conduite d'amenée de fluide primaire (11) du circuit de fluide primaire (10), par l'intermédiaire de laquelle le fluide de transport de chaleur primaire (HTF1) est transporté depuis l'appareil de chauffage de fluide (3) en direction de l'appareil d'échange de chaleur (60), présente une première longueur (L1) ;
- une conduite d'amenée de fluide secondaire (21) du circuit de fluide secondaire (20), par l'intermédiaire de laquelle le fluide de transport de chaleur secondaire (HTF2) est transporté depuis l'appareil d'échange de chaleur (60) en direction du réacteur (40), présente une seconde longueur (L2) qui est supérieure à la première longueur (L1).

16. Dispositif (1) selon l'une des revendications 12 à 15, **caractérisé par** les caractéristiques suivantes :
- le dispositif (1) présente un second appareil d'échange de chaleur (70) au moyen duquel l'énergie thermique du fluide de transport de chaleur secondaire (HTF2) peut être transférée à un fluide de transport de chaleur tertiaire (HTF3) ; et
- le réacteur (40) est conçu pour transférer la chaleur du fluide de transport de chaleur tertiaire (HTF3) au moins indirectement à l'oxyde métallique (M1) à réduire et/ou au gaz ou mélange de gaz utilisé pour la réduction de l'oxyde métallique (M1) à réduire.

17. Dispositif (1) selon l'une des revendications 12 à 16, **caractérisé par** les caractéristiques suivantes :
- le réacteur (40) présente une première zone (41) pour l'amenée dans le réacteur (40) du gaz ou mélange de gaz utilisé pour la réduction de l'oxyde métallique (M1) à réduire ;
- le réacteur (40) présente une deuxième zone (42) pour l'amenée dans le réacteur (40) de l'oxyde métallique (M1) à réduire, dans lequel la deuxième zone (42) est disposée, dans l'état de fonctionnement du réacteur (40), en dessous de la première zone (41) ; et
- le réacteur (40) présente une troisième zone (43) pour l'évacuation au moins partielle du réacteur (40) du produit de réaction généré par la réaction d'oxydoréduction de l'oxyde métallique (M1) et du gaz ou mélange de gaz, dans lequel la troisième zone est disposée, dans l'état de fonctionnement du réacteur (40), en dessous de la deuxième zone (42).
